# EUROPÄISCHE PATENTANMELDUNG

(11) **EP 4 335 796 A2**
(43) Veröffentlichungstag der Anmeldung: **13.03.2024**
(21) Anmeldenummer: 24153900.6
(22) Anmeldetag: 16.12.2016
(51) Int. Cl.: B65G 47/90

(54) **SYSTEM ZUM UMGANG MIT UND PALETTIEREN VON GETRÄNKEBEHÄLTNISSEN UND VERFAHREN ZUM MANIPULIEREN VON STÜCKGÜTERN EINES STÜCKGUTSTROMES**

(30) Priorität: 12.02.2016 DE 102016202182
(62) Teilanmeldung aus: 16204661.9
(71) Anmelder: Krones Aktiengesellschaft, 93073 Neutraubling (DE)
(72) Erfinder: WINZINGER, Frank, 93073 Neutraubling (DE)
(74) Vertreter: Benninger, Johannes

(57) **Zusammenfassung**

Es ist eine Vorrichtung (1) zum Manipulieren von Stückgütern (5) offenbart. Die Vorrichtung umfasst einen Manipulator (40) mit mindestens eine Klemm- und/oder Greifeinrichtung (60), über welche mindestens eine Klemm- und/oder Greifeinrichtung (60) einzelne Stückgüter (5) eines aus einer Vielzahl an Stückgütern (5) bestehenden Stückgutstromes entgegengenommen und gegenüber weiteren Stückgütern (5) des Stückgutstromes in eine neue relative Anordnung gebracht werden können. Weiter wenigstens eine Horizontalfördereinrichtung (50), über welche ein aus einer Vielzahl an Stückgütern (5) bestehender Stückgutstrom einem Erfassungsbereich des Manipulators (40) zuführbar ist sowie eine Steuerungseinrichtung (S), welche zur Vorgabe einer bestimmten Bewegung der mindestens einen Klemm- und/oder Greifeinrichtung (60) mit dem Manipulator (40) in Verbindung steht. Die Steuerungseinrichtung (S) besitzt Informationen zu einer geschlossenen Arbeitsbahn für die mindestens eine Klemm- und/oder Greifeinrichtung (60). Auf der geschlossenen Arbeitsbahn (80) sind mindestens zwei unterschiedliche Positionen festgesetzt. Der Manipulator (40) ist via die Steuerungseinrichtung (S) derart ansteuerbar, dass die mindestens eine Klemm- und/oder Greifeinrichtung (60) die zwei unterschiedlichen Positionen anfährt und bei Erreichen einer jeweiligen der mindestens zwei unterschiedlichen Positionen jeweils mindestens ein entgegengenommenes Stückgut (5) freigibt.

## Beschreibung

Die vorliegende Erfindung betrifft eine Vorrichtung und ein Verfahren zum Manipulieren von Stückgütern eines Stückgutstromes.

Bekannte Verpackungs- oder Palettieranlagen zum Stapeln und Palettieren oder Verteilen von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder ein Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben oder diese in Gassen zu verteilen.

In aktuellen Abfüll- und Verpackungslinien werden unterschiedliche Verfahren zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind. Derartige Greifvorrichtungen sind etwa aus der EP 2 388 216 A1 bekannt.

Bei aus dem Stand der Technik bekannten Verfahren können die Greifvorrichtungen ein Gebinde oder mehrere Gebinde eines Gebindestromes entgegennehmen, in Richtung einer für das eine Gebinde oder die mehreren Gebinde vorgesehenen Position bewegen und dort freigeben. Nach Freigabe wird die Greifvorrichtung sodann in Richtung des Gebindestromes zurückbewegt, um dort erneut ein Gebinde oder mehrere Gebinde entgegenzunehmen und in eine jeweilige für das Gebinde oder die mehreren Gebinde vorgesehene Position zu überführen.

Sofern der Durchsatz hierbei erhöht werden soll, wird in der Praxis die Taktfrequenz angehoben, so dass derartige aus dem Stand der Technik bekannte Greifvorrichtungen eine größere Anzahl an Artikeln pro Zeiteinheit manipulieren. Ab einer gewissen Taktfrequenz erreichen solche Manipulatoren ihre Leistungsgrenze. Wünschenswert wären Vorrichtungen und Verfahren, mittels welcher sich auf einfache Art und Weise der Durchsatz weiter erhöhen lässt.

Aufgabe der Erfindung ist daher, eine gattungsgemäße Vorrichtung und ein gattungsgemäßes Verfahrens zur Verfügung zu stellen, welche einen hohen Durchsatz bei einer Manipulation von Stückgütern besitzen. Die Vorrichtung soll zudem einen unkomplizierten Aufbau besitzen. Weiter soll das Verfahren einfach umgesetzt werden können.

Die obigen Aufgaben werden durch eine Vorrichtung, ein Verfahren und ein System gelöst, welche die Merkmale in den Schutzansprüchen 1, 7 und 15 umfassen. Weitere vorteilhafte Ausgestaltungen werden durch die Unteransprüche beschrieben.

Die Erfindung betrifft eine Vorrichtung zum Manipulieren von Stückgütern. Die Vorrichtung umfasst einen Manipulator mit mindestens einer Klemm- und/oder Greifeinrichtung, über welche mindestens eine Klemm- und/oder Greifeinrichtung einzelne Stückgüter eines aus einer Vielzahl an Stückgütern bestehenden Stückgutstromes entgegengenommen und gegenüber weiteren Stückgütern des Stückgutstromes in eine neue relative Anordnung gebracht werden können.

Der Manipulator kann in denkbaren Ausführungsformen als Industrieroboter ausgebildet sein. Weiter ist denkbar, dass der Manipulator mindestens eine an einer Aufhängung hängend befestigte Klemm- und/oder Greifeinrichtung besitzt, welche zum Überführen der einzelnen Stückgüter in die neue relative Anordnung entlang der Aufhängung bewegt werden kann. In bevorzugten Ausführungsformen kann der Manipulator als Parallelkinematik-Roboter bzw. als Tripod ausgebildet sein. Demnach kann der Manipulator mindestens drei bewegliche Arbeitsarme umfassen, welche mit der mindestens einen Klemm- und/oder Greifeinrichtung in Verbindung stehen und zum Bewegen der mindestens einen Klemm- und/oder Greifeinrichtung zusammenwirken.

In einer weiteren Ausführungsform kann der Manipulator als Knickarmroboter ausgebildet sein. Alternativ kann der Manipulator derart beschaffen sein, dass die mindestens eine Klemm- und/oder Greifeinrichtung an zwei oder drei zueinander senkrecht stehenden Führungen (Achsen) gelagert ist, entlang welcher die mindestens eine Klemm- und/oder Greifeinrichtung motorisch verschoben werden kann - jeweils durch einen eigenen Antrieb pro Achse. Die Führungen können bevorzugt an einem Portal angeordnet sein.

Weiter umfasst die Vorrichtung wenigstens eine Horizontalfördereinrichtung, über welche ein aus einer Vielzahl an Stückgütern bestehender Stückgutstrom einem Erfassungsbereich des Manipulators zuführbar ist sowie eine Steuerungseinrichtung, welche zur Vorgabe einer bestimmten Bewegung der mindestens einen Klemm- und/oder Greifeinrichtung mit dem Manipulator in Verbindung steht. Die wenigstens eine Horizontalfördereinrichtung kann mindestens ein Transportband umfassen, welches mindestens eine Transportband zumindest abschnittsweise im Erfassungsbereich des Manipulators positioniert ist und/oder mittels welches mindestens einen Transportbandes Stückgüter dem Erfassungsbereich des mindestens einen Manipulators zuführbar sind. Die Erfindung ist jedoch nicht auf Ausführungsformen beschränkt, bei welchen die wenigstens eine Horizontalfördereinrichtung ein Transportband umfasst. So kann die wenigstens eine Horizontalfördereinrichtung in denkbaren Ausführungsformen ergänzend oder alternativ zu einem Transportband beispielsweise auch mehrere Mittel besitzen, welche Stückgüter entlang einer horizontal orientierten Transportebene schieben.

Die Steuerungseinrichtung besitzt Informationen zu einer geschlossenen Arbeitsbahn für die mindestens eine Klemm- und/oder Greifeinrichtung, auf welcher geschlossenen Arbeitsbahn mindestens zwei unterschiedliche Positionen festgesetzt sind. Der Manipulator ist via die Steuerungseinrichtung derart ansteuerbar, dass die mindestens eine Klemm- und/oder Greifeinrichtung die zwei unterschiedlichen Positionen anfährt bzw. zeitversetzt anfährt und bei Erreichen einer jeweiligen der mindestens zwei unterschiedlichen Positionen jeweils mindestens ein entgegengenommenes Stückgut freigibt. Hierdurch kann der Manipulator bzw. die mindestens eine Klemm- und/oder Greifeinrichtung im Rahmen einer umlaufenden Bewegung entlang der geschlossenen Arbeitsbahn jeweils mindestens ein entgegengenommenes Stückgut an jeder der mindestens zwei unterschiedlichen Positionen freigeben. Gegenüber aus dem Stand der Technik bekannten Ausführungsformen besteht somit die Möglichkeit, mindestens zwei Stückgüter während einer Arbeitsbewegung bzw. einer umlaufenden Bewegung der Klemm- und/oder Greifeinrichtung entlang der geschlossenen Arbeitsbahn zeitversetzt zu manipulieren, wodurch die erfindungsgemäße Vorrichtung einen hohen Durchsatz gegenüber bereits aus dem Stand der Technik bekannten Vorrichtungen besitzt.

Unter der geschlossenen Arbeitsbahn kann der Bahnverlauf von einer Startposition, in der Stückgüter von dem Manipulator entgegengenommen werden, über die zwei unterschiedlichen Positionen zu einer Position, in welcher wieder neue Stückgüter entgegengenommen werden, verstanden werden. Sollten beispielsweise Stückgüter von zwei voneinander beabstandeten Zuführförderern zugeführt werden, wobei in einem ersten Arbeitsgang nur Stückgüter von einem ersten Zuförderer entgegengenommen werden und in einem zweiten Arbeitsgang nur Stückgüter von einem zweiten Zuförderer, so befindet sich die mindestens eine Klemm- und/oder Greifeinrichtung beim Start des zweiten Arbeitsgangs ggf. nicht in derselben Position wie beim Start des ersten Arbeitsgangs, bewegt sich aber beim ersten Arbeitsgang trotzdem entlang einer geschlossenen Arbeitsbahn im Sinne dieser Schrift, da er zu einer Startposition zurückfährt.

In bevorzugten Ausführungsformen kann es sein, dass die mindestens eine Klemm- und/oder Greifeinrichtung mindestens zwei Aufnahmen zum Entgegennehmen jeweils mindestens eines Stückgutes besitzt. Die mindestens zwei Aufnahmen können zur Freigabe des jeweiligen mindestens einen entgegengenommenen Stückgutes via die Steuerungseinrichtung unabhängig voneinander ansteuerbar sein, insbesondere durch zwei Antriebe, wovon jeweils einer einer Aufnahme zugordnet ist. Derartige Ausführungsformen erhöhen zusätzlich die Flexibilität der Vorrichtung bei einer Manipulation der für die mindestens zwei Aufnahmen jeweils vorgesehenen Stückgüter.

Bei den Antrieben kann es sich insbesondere um Servomotoren handeln.

Werden die Stückgüter von der mindestens einen Klemm- und/oder Greifeinrichtung von zwei Seiten gegriffen, so ist es möglich, das Greifen individuell kraftgesteuert durchzuführen. Wird ein Stückgut beispielsweise während des Versetzens kaum beschleunigt, wird dieses mit einer schwächeren Kraft gegriffen als ein anderes Stückgut, welches stärker beschleunigt wird, ggf. im selben Arbeitsgang.

Alternativ können die beiden Aufnahmen von einem gemeinsamen Antrieb abhängig voneinander ansteuerbar sein. In diesem Fall wäre es denkbar, dass mehrere Stückgüter in bzw. bei Erreichen einer ersten Position freigegeben werden. Nach Freigabe kann der Manipulator bzw. die mindestens eine Klemm- und/oder Greifeinrichtung wenigstens ein bei Erreichen der ersten Position freigegebenes Stückgut nochmals entgegennehmen und zeitlich nach Entgegennahme in Richtung der zweiten Position bewegt werden. Dies kann beispielsweise durch ein zwischenzeitliches (zwischen Abgabe und erneuter Aufnahme) Verschieben der mindestens einen Klemm- und/oder Greifeinrichtung geschehen.

Weiter kann es sein, dass wenigstens eine Aufnahme und vorzugsweise sämtliche der mindestens zwei Aufnahmen jeweils mindestens ein Klemm- und/oder Greifelement umfassen, mittels welches mindestens einen Klemm- und/oder Greifelementes das jeweilige mindestens eine Stückgut nach Entgegennahme gehalten werden kann. Zudem kann das mindestens eine Klemm- und/oder Greifelement zur Freigabe bzw. zum Loslassen des jeweiligen mindestens einen Stückgutes in Richtung nach oben bewegbar ausgebildet sein. Das mindestens eine Klemm- und/oder Greifelement kann somit an einer seitlichen Mantelfläche des jeweiligen entgegengenommenen mindestens einen Stückgutes kraftbeaufschlagt anliegen. Sofern die Klemm- und/oder Greifeinrichtung nach Freigabe mindestens eines aufgenommenen Stückgutes in Richtung einer zweiten der mindestens zwei unterschiedlichen Positionen bewegt werden soll, kann es sein, dass das Klemm- und/oder Greifelement hierbei ungewollt mit einem Stückgut in Kontakt tritt. Ausführungsformern, bei welchen das mindestens eine Klemm- und/oder Greifelement zum Loslassen des jeweiligen mindestens einen Stückgutes in Richtung nach oben bewegbar ausgebildet ist, haben sich bewährt, um bei einer Vielzahl an denkbaren Arbeitsbahnen mit unterschiedlichen Geometrien einen ungewollten Kontakt des mindestens einen Klemm- und/oder Greifelementes zu einem Stückgut zu vermeiden.

Insbesondere kann es sein, dass das mindestens eine Klemm- und/oder Greifelement zur Freigabe bzw. Loslassen des jeweiligen mindestens einen Stückgutes in Richtung nach oben bewegt wird und nach einer Bewegung in Richtung nach oben seine Position relativ zum Rest der Klemm- und/oder Greifeinrichtung bzw. seine vertikale Lageposition bis zu einer Vollendung einer vollständigen umlaufenden Bewegung der Klemm- und/oder Greifeinrichtung entlang der geschlossenen Arbeitsbahn beibehält.

In anderen Worten kann ein und/oder können beide Klemm- und/oder Greifelemente in eine inaktive Position gebracht werden, wenn gerade kein Stückgut von ihnen manipuliert werden muss. Insbesondere können sie einzeln oder gemeinsam relativ zum Rest der Klemm- und/oder Greifeinrichtung, insbesondere vollständig, in eine Ebene verfahren werden, welche sich oberhalb einer Ebene befindet, in welcher sich Stückgüter befinden.

Insbesondere kann es sein, dass das mindestens eine Klemm- und/oder Greifelement für seine Bewegung in Richtung nach oben schwenkbar gelagert ist. Denkbar ist beispielsweise, dass das mindestens eine Klemm- und/oder Greifelement für seine Schwenkbewegung an eine zumindest näherungsweise horizontal orientierte Achse bzw. an einen Bolzen mit zumindest näherungsweise horizontaler Orientierung gekoppelt ist. Das mindestens eine Klemm- und/oder Greifelement kann hierzu mit einem Aktor in Verbindung stehen, welcher mittels einer linearen Stellbewegung eines Betätigungsgliedes eine Schwenkbewegung des mindestens einen Klemm- und/oder Greifelementes in Richtung nach oben bewirkt.

Die Klemm- und/oder Greifelemente können jeweils individuell relativ zu einer Manipulatorbasis mittels eines eigenen Antriebs gedreht werden. So ist es beispielsweise möglich, nur eines der beiden Stückgüter während des Versetzens zu drehen und das andere nicht.

Weiter ist vorstellbar, dass sich die wenigstens eine Horizontalfördereinrichtung vollständig durch den Erfassungsbereich des Manipulators erstreckt und mit der Steuerungseinrichtung in Verbindung steht. Über die Steuerungseinrichtung kann die wenigstens eine Horizontalfördereinrichtung zum unterbrechungsfreien Bewegen der Vielzahl an Stückgütern des Stückgutstromes ansteuerbar sein. Die Steuerungseinrichtung kann zwei Steuerungen umfassen, wovon eine zur Steuerung des Manipulators eingerichtet ist und eine zur Steuerung der Horizontalfördereinrichtung.

Im Zulaufbereich zum Manipulator, also in Transportrichtung gesehen vor dem Manipulator, kann eine oder können mehrere Förderer vorgesehen sein, welche Stückgüter zuführen. Jeder Zuführförderer kann separat ansteuerbar sein, so dass je Zuführförderer eine bestimmte, vorzugsweise vorgebbare Anzahl von Stückgütern an die Horizontalfördereinrichtung übergeben werden, über welcher sich ggf. der Manipulator befindet.

Insbesondere sind die Zuführförderer und die Horizontalfördereinrichtung zumindest im Übergangsbereich parallel zueinander (fluchtend) angeordnet und fördern die Stückgüter zumindest im Übergangsbereich von dem Zuführförderer zu der Horizontalfördereinrichtung in dieselbe Richtung.

Sofern mehrere Zuführförderer vorgesehen sind, können diese vorzugsweise parallel nebeneinander angeordnet sein. Insbesondere können sie die Stückgüter pulkweise abwechselnd an die Horizontalfördereinrichtung abgeben, über welcher sich der Manipulator befindet. Beispielsweise können von einem Zuführförderer zwei Stückgüter nacheinander abgegeben werden, zeitlich hierauf anschließend können von einem weiteren Zuführförderer zwei weitere Stückgüter abgegeben werden. Wenn über einen Zuführförderer keine Stückgüter abgegeben werden, kann der jeweilige Zuführförderer während einer Zeit angehalten werden, in welcher ein weiterer Zuführförderer Stückgüter abgibt.

Ein Zuführförderer kann eine geringere Breite aufweisen als die Horizontalfördereinrichtung, über welcher sich ggf. der Manipulator befindet. Die Breite ist hierbei als die horizontale Erstreckung eines Förderers senkrecht zur Transportrichtung der Stückgüter zu verstehen.

Die Anzahl der abgegebenen Stückgüter pro Zuführförderer kann mittels eines Sensors erfasst werden, welcher die abgegebenen Stückgüter pro Zuführförderer zählt.

Weithin kann es sein, dass zwei Manipulatoren parallel nebeneinander oder in Transportrichtung hintereinander angeordnet sind, um den Durchsatz zu vergrößern. In diesem Fall kann einer von mehreren Zuförderern einem ersten Manipulator zugeordnet sein, so dass der erste Manipulator ausschließlich über seinen jeweiligen Zuförderer bedient wird bzw. Stückgüter von seinem jeweiligen Zuförderer erhält. Weiter kann ein zweiter von mehreren Zuförderern einem zweiten Manipulator zugeordnet sein, so dass der zweite Manipulator ausschließlich über seinen jeweiligen zweiten Zuförderer bedient wird bzw. Stückgüter von seinem jeweiligen zweiten Zuförderer erhält. Sofern zwei Manipulatoren in Transportrichtung hintereinander angeordnet sind, können eine Zuförderer oder mehrere Zuförderer Stückgüter in Richtung der zwei Manipulatoren bewegen, wobei ein erster Manipulator einzelne Stückgüter passieren lässt. Die einzelnen Stückgüter, welche den ersten Manipulator passieren, können sodann via den zweiten Manipulator entgegengenommen und manipuliert werden.

Bei zwei Manipulatoren können sich die jeweiligen Arbeitsbereiche, in denen jeweils Stückgüter manipulierbar sind, zumindest bereichsweise überlappen.

Die Erfindung betrifft darüber hinaus ein Verfahren zum Umgang mit Stückgütern. Merkmale, welche vorhergehend zur Vorrichtung beschrieben wurden, können auch für das erfindungsgemäße Verfahren vorgesehen sein und werden daher nicht redundant erwähnt. Zudem können nachfolgende Merkmale, welche denkbare Ausführungsformen des Verfahrens betreffen, für die vorhergehend beschriebene Vorrichtung Verwendung finden. Gleiches gilt für die Figurenbeschreibung.

Im Rahmen eines Schrittes des erfindungsgemäßen Verfahrens wird ein aus einer Vielzahl an Stückgütern bestehender Stückgutstrom ausgebildet und in einen Erfassungsbereich eines Manipulators geführt. Der Stückgutstrom kann durch wenigstens eine Horizontalfördereinrichtung ausgebildet bzw. bewegt werden. Insbesondere können die Vielzahl an Stückgütern des Stückgutstromes einen Schrumpftunnel verlassen und zeitlich nachfolgend in Richtung des Manipulators bzw. in den Erfassungsbereich des Manipulators bewegt werden. Die Stückgüter können demnach durch Gebinde bzw. durch mehrere zu einem jeweiligen Gebinde zusammengefasste Getränkebehältnisse ausgebildet sein. Die Behälter, wie Flaschen oder Dosen innerhalb eines Gebindes, können auch mittels eines Haftmittels, wie Klebstoff oder Leim, untereinander befestigt sein.

Ein weiterer Schritt des erfindungsgemäßen Verfahrens sieht ein Entgegennehmen bzw. selektives Entgegennehmen von Stückgütern des Stückgutstromes über mindestens eine Klemm- und/oder Greifeinrichtung des Manipulators und ein Bewegen der mindestens einen Klemm- und/oder Greifeinrichtung entlang einer geschlossenen Arbeitsbahn vor. Die mindestens eine Klemm- und/oder Greifeinrichtung überführt während ihrer Bewegung entlang der geschlossenen Arbeitsbahn entgegengenommene Stückgüter des Stückgutstromes in eine relative Anordnung gegenüber weiteren Stückgütern.

Zudem sind entlang der geschlossenen Arbeitsbahn mindestens zwei unterschiedliche bestimmte Positionen festgesetzt, wobei die mindestens eine Klemm- und/oder Greifeinrichtung des Manipulators zum Überführen der entgegengenommenen Stückgüter in die neue relative Anordnung bei Erreichen der mindestens zwei unterschiedlichen Positionen jeweils mindestens ein entgegengenommenes Stückgut freigibt. Hiermit lässt sich ein hoher Durchsatz bei einer Manipulation von Stückgütern eines Stückgutstromes erreichen.

In bevorzugten Ausführungsformen des erfindungsgemäßen Verfahrens kann es sein, dass der Manipulator über die mindestens eine Klemm- und/oder Greifeinrichtung wenigstens zwei Stückgüter des Stückgutstromes zumindest näherungsweise zeitgleich entgegennimmt und von den wenigstens zwei entgegengenommenen Stückgütern jeweils mindestens ein entgegengenommenes Stückgut bei Erreichen der mindestens zwei unterschiedlichen bestimmten Positionen freigibt.

Denkbar ist zudem, dass ein Verlauf der geschlossenen Arbeitsbahn derart ausgebildet ist, dass die mindestens eine Klemm- und/oder Greifeinrichtung unmittelbar bei Erreichen einer ersten der mindestens zwei bestimmten unterschiedlichen Positionen und Freigabe des jeweiligen mindestens einen entgegengenommenen Stückgutes seine Bewegungsrichtung ändert und auf direktem Wege eine zweite der mindestens zwei unterschiedlichen Positionen anfährt.

Insbesondere kann die mindestens eine Klemm- und/oder Greifeinrichtung die mindestens zwei unterschiedlichen bestimmten Positionen jeweils über eine Bewegung in linearer Richtung anfahren.

Bewährt haben sich zudem Ausführungsformen, bei welchen einzelne Stückgüter des Stückgutstromes nicht von der mindestens einen Klemm- und/oder Greifeinrichtung entgegengenommen werden und in linearer Richtung den Erfassungsbereich des mindestens einen Manipulators passieren. Nicht sämtliche Stückgüter müssen daher in jeder Ausführungsform zwingend vom Manipulator manipuliert werden. Auch können einzelne Stückgüter ggf. via eine Horizontalfördereinrichtung durch den Erfassungsbereich des Manipulators bewegt werden. Hierbei kann die mindestens eine Klemm- und/oder Greifeinrichtung entlang der geschlossenen Arbeitsbahn durchgehend schräg zur linearen Richtung der nicht von der mindestens einen Klemm -und/oder Greifeinrichtung entgegengenommenen Stückgüter bewegt werden. Die geschlossene Arbeitsbahn kann beispielsweise einen polygonen und insbesondere dreieckförmigen Verlauf besitzen.

Weiter kann es sein, dass mindestens ein von der mindestens einen Klemm- und/oder Greifeinrichtung entgegengenommenes Stückgut vor seiner Freigabe über die mindestens eine Klemm- und/oder Greifeinrichtung um eine vertikale Achse gedreht wird.

Weiter kann die mindestens eine Klemm- und/oder Greifeinrichtung mindestens zwei Stückgüter entgegennehmen und die mindestens zwei Stückgüter um eine gemeinsame vertikale Achse bis zum Erreichen einer ersten der mindestens zwei unterschiedlichen bestimmten Positionen zeitgleich drehen.

Es ist zudem vorstellbar, dass im Stückgutstrom die Vielzahl an Stückgütern bei Eintritt in den Erfassungsbereich des Manipulators in wenigstens zwei parallel zueinander orientierten Reihen bewegt werden, wobei die mindestens eine Klemm- und/oder Greifeinrichtung aus mindestens einer ersten und mindestens einer zweiten der wenigstens zwei parallel zueinander orientierten Reihen jeweils mindestens ein Stückgut entgegennimmt und zeitlich hierauf folgend die mindestens zwei unterschiedlichen bestimmten Positionen der geschlossenen Arbeitsbahn anfährt.

Insbesondere kann das Manipulieren des Stückguts von dem Manipulator ein Versetzen oder Verschieben umfassen, bei welchem das Stückgut horizontal in einem Winkel (ungleich 0°) zur Transportrichtung auf der währenddessen fördernden Horizontalfördereinrichtung versetzt wird. Die dabei ausgeführte Bewegung kann einen Geschwindigkeitsanteil in Transportrichtung und einen Geschwindigkeitsanteil senkrecht zur Transportrichtung (jeweils relativ zu einem ortsfesten Maschinengestell) umfassen.

Insbesondere weist der Anteil in Transportrichtung höchstens einen Unterschied von 50%, vorzugsweise höchstens 25%, besonders bevorzugt höchstens 5% zu der Geschwindigkeit des Horizontalförderers auf. So ist es z.B. möglich, die Reibung bei einem Verschieben des Stückguts mit Kontakt zur Horizontalfördereinrichtung gering zu halten. Dies kann insbesondere bei einem Versetzen der Gebinde von einer Startposition zur ersten Position der Fall sein, zusätzlich oder alternativ kann dies auch bei Versetzung des zweiten Stückguts auf die zweite Position der Fall sein.

Weiterhin kann vorgesehen sein, dass die Vorrichtung mindestens zwei Abfuhrspuren aufweist, in welche die auf den oder dem Zuförderer(n) angelieferten Stückgüter mittels des Manipulators, insbesondere gleichmäßig, verteilt werden. Die mindestens zwei Abfuhrspuren können daher dem Manipulator in einer Transportrichtung der Stückgüter nachgeordnet sein.

Insbesondere kann vorgesehen sein, dass die Stückgüter bzw. Gebinde auf einem Transportband der Horizontalfördereinrichtung von dem Manipulator erfasst und/oder gegriffen werden und auf demselben Transportband wieder von dem Manipulator freigegeben werden.

Insbesondere kann vorgesehen sein, dass ein absolut zurückgelegter Weg der mindestens einen Klemm- und/oder Greifeinrichtung von einer Startposition zur ersten Position größer ist als ein absolut zurückgelegter Weg von der ersten Position zur zweiten Position. Insbesondere kann ein anteilig senkrecht zur Transportrichtung zurückgelegter Weg der mindestens einen Klemm- und/oder Greifeinrichtung von einer Startposition zur ersten Position größer sein als ein anteilig senkrecht zur Transportrichtung zurückgelegte Weg von der ersten Position zur zweiten Position. Auf diese Weise können die Stückgüter beispielsweise in einem Arbeitsgang effektiver verteilt werden, indem wenigstens zwei Stückgüter im Wesentlichen nur zu einer Seite der Horizontalfördereinrichtung bewegt werden. In einem weiteren Arbeitsgang kann dann eine andere Seite in gleicher Weise beliefert werden.

Wenn die mindestens eine Klemm- und/oder Greifeinrichtung nur ein Greifelement aufweist, kann es sein, dass dieses Greifelement an der ersten Position beide Stückgüter freigibt und anschließend erneut eines der Stückgüter erfasst und dieses an die zweite Position versetzt. In anderen Worten kann demnach ein Umgreifen stattfinden.

Es kann sein, dass in einem Arbeitsgang bzw. bei einer umlaufenden Bewegung der mindestens einen Klemm- und/oder Greifeinrichtung des Manipulators entlang der geschlossenen Arbeitsbahn Gebinde nur auf einer Hälfte der Horizontalfördereinrichtung freigegeben werden. Die Hälfte stellt ggf. die Fläche des Horizontalförderers dar, welche sich in Transportrichtung der Gebinde gesehen seitlich einer Mittellinie des Förderers bzw. der Horizontalfördereinrichtung befindet.

Weiter kann es sein, dass in einem Arbeitsbang bzw. während einer umlaufenden Bewegung der mindestens einen Klemm- und/oder Greifeinrichtung des Manipulators entlang der geschlossenen Arbeitsbahn Gebinde auf zwei Hälften der Horizontalfördereinrichtung freigegeben werden. Eine jeweilige Hälfte kann hierbei eine Fläche des Horizontalförderers darstellen, welche sich in Transportrichtung der Gebinde gesehen seitlich einer Mittellinie des Förderers bzw. der Horizontalfördereinrichtung befindet.

Sofern der Horizontalfördereinrichtung ein Zuförderer vorgeordnet ist, kann eine Transportrichtung des Zuförderers mit einer Transportrichtung der Horizontalfördereinrichtung fluchten. Sofern zwei Zuförderer vorgesehen sind, können deren Transportrichtungen mit einer Transportrichtung der Horizontalfördereinrichtung jeweils fluchten. Der eine Zuförderer oder die mehreren bzw. zwei Zuförderer können derart ausgebildet sein, dass der eine Zuförderer oder die mehreren Zuförderer der Horizontalfördereinrichtung Stückgüter bzw. Gebinde zumindest näherungsweise über deren gesamte Breite zuführen können.

Die Erfindung umfasst weiterhin folgendes Verfahren und eine Vorrichtung mit einer Steuerung zur Durchführung des Verfahrens, wobei die bereits genannten Aspekte zum bereits Beschriebenen auch hier Anwendung finden können:
Verfahren zum Umgang mit Stückgütern, das Verfahren umfassend folgende Schritte:
- Aufnahme mindestens zweier Stückgüter durch einen Manipulator aus einem Stückgutstrom an einer Startposition, wobei der Stückgutstrom auf einem Horizontalförderer transportiert wird,
- Transportieren beider Stückgüter durch den Manipulator relativ zum Horizontalförderer zu einer ersten Position auf dem Horizontalförderer, wo eines der Stückgüter vom Manipulator abgegeben wird,
- Anschließendes Transportieren des anderen bzw. noch vom Manipulator aufgenommenen Stückguts durch den Manipulator zu einer zweiten Position auf einem Horizontalförderer, welche beabstandet zu der ersten Position ist und Abgeben des anderen bzw. noch vom Manipulator aufgenommenen Stückguts an der zweiten Position.

Unter "Abgeben" kann ein Loslassen verstanden werden. Weiter ist denkbar, dass ein erster Horizontalförderer vorgesehen ist, welcher den Stückgutstrom transportiert und ein weiterer Horizontalförderer, an welchen das jeweilige Stückgut an der zweiten Position abgegeben wird. Eine Transportrichtung des ersten Horizontalförderers und eine Transportrichtung des weiteren Horizontalförderers können miteinander fluchten. Insbesondere kann der Horizontalförderer eine konstante Transportgeschwindigkeit aufweisen.

Die Erfindung betrifft darüber hinaus ein System zum Umgang mit und Palettieren von Getränkebehältnissen. Das System umfasst:
- Eine Füllmaschine, mittels welcher Flüssigkeit in die Getränkebehältnisse eingebracht werden kann,
- Mindestens eine stromabwärts auf die Füllmaschine folgende Verpackungs- und/oder Schrumpfvorrichtung, mittels welcher jeweils mehrere befüllte Getränkebehältnisse zu einem jeweiligen Gebinde zusammengefasst werden können,
- Wenigstens eine stromabwärts auf die Verpackungs- und/oder Schrumpfvorrichtung folgende Vorrichtung gemäß einer der vorherig bereits beschriebenen Ausführungsformen und über welche die Gebinde manipulierbar sind, sowie
- Eine Palettierstation, mittels welcher die via die Vorrichtung manipulierten Gebinde in Richtung einer zugeordneten Palette bewegt und auf der zugeordneten Palette abgesetzt werden können.

In besonders bevorzugten Ausführungsformen kann vorgesehen sein, dass der Vorrichtung, über welche die Gebinde manipulierbar sind und der Palettierstation mindestens eine Einrichtung zum Verdichten der via die Vorrichtung manipulierten Gebinde zwischengeordnet ist. Mittels der Einrichtung zum Verdichten kann aus den manipulierten Gebinden eine palettierfähige Lage hergestellt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer ersten Ausführungsform einer erfindungsgemäßen Vorrichtung;
Figur 2 zeigt weitere Aspekte des Manipulators der Ausführungsform gemäß Figur 1;
Figur 3 zeigt weitere Aspekte des Manipulators der Ausführungsform gemäß den Figuren 1 und 2;
Figur 4 zeigt eine schematische Ansicht einer Ausführungsform einer Klemm- und/oder Greifeinrichtung, wie sie für die erfindungsgemäße Vorrichtung vorgesehen sein kann;
Figuren 5A und 5B zeigen zwei erste Schritte, wie sie bei einer denkbaren Ausführungsform des erfindungsgemäßen Verfahrens vorgesehen sein können;
Figuren 6A und 6B zeigen zwei an die Schritte gemäß Figuren 5 zeitlich anschließende weitere Schritte, wie sie bei einer denkbaren Ausführungsform des erfindungsgemäßen Verfahrens vorgesehen sein können.
Figuren 7A und 7B zeigen zwei an die Schritte gemäß Figuren 6 zeitlich anschließende weitere Schritte, wie sie bei einer denkbaren Ausführungsform des erfindungsgemäßen Verfahrens vorgesehen sein können;
Figuren 8A und 8B zeigen zwei an die Schritte gemäß Figuren 7 zeitlich anschließende weitere Schritte, wie sie bei einer denkbaren Ausführungsform des erfindungsgemäßen Verfahrens vorgesehen sein können;
Figuren 9A und 9B zeigen zwei an die Schritte gemäß Figuren 8 zeitlich anschließende weitere Schritte, wie sie bei einer denkbaren Ausführungsform des erfindungsgemäßen Verfahrens vorgesehen sein können;
Figuren 10 verdeutlichen jeweils eine Bewegung der Klemm- und/oder Greifeinrichtung, wie sie in denkbaren Ausführungsformen des erfindungsgemäßen Verfahrens vorgesehen sein kann;
Figuren 11A und 11B zeigen zwei erste Schritte, wie sie bei einer weiteren denkbaren Ausführungsform des erfindungsgemäßen Verfahrens vorgesehen sein können;
Figuren 12A und 12B zeigen zwei an die Schritte gemäß Figuren 11A und 11B zeitlich anschließende weitere Schritte, wie sie bei einer denkbaren Ausführungsform des erfindungsgemäßen Verfahrens vorgesehen sein können.
Figuren 13A und 13B zeigen zwei an die Schritte gemäß Figuren 12A und 12B zeitlich anschließende weitere Schritte, wie sie bei einer denkbaren Ausführungsform des erfindungsgemäßen Verfahrens vorgesehen sein können;
Figuren 14A und 14B zeigen zwei an die Schritte gemäß Figuren 13A und 13B zeitlich anschließende weitere Schritte, wie sie bei einer denkbaren Ausführungsform des erfindungsgemäßen Verfahrens vorgesehen sein können;
Figuren 15A und 15B zeigen zwei an die Schritte gemäß Figuren 14A und 14B zeitlich anschließende weitere Schritte, wie sie bei einer denkbaren Ausführungsform des erfindungsgemäßen Verfahrens vorgesehen sein können;
Figur 16 zeigt einen an die Schritte gemäß Figuren 15A und 15B anschließenden weiteren Schritt, wie er bei einer denkbaren Ausführungsform des erfindungsgemäßen Verfahrens vorgesehen sein kann;
Figuren 17A und 17B zeigen zwei erste Schritte, wie sie bei einer weiteren denkbaren Ausführungsform des erfindungsgemäßen Verfahrens vorgesehen sein können;
Figuren 18A und 18B zeigen zwei an die Schritte gemäß Figuren 17A und 17B zeitlich anschließende weitere Schritte, wie sie bei einer denkbaren Ausführungsform des erfindungsgemäßen Verfahrens vorgesehen sein können;
Figuren 19A und 19B zeigen zwei an die Schritte gemäß Figuren 18A und 18B zeitlich anschließende weitere Schritte, wie sie bei einer denkbaren Ausführungsform des erfindungsgemäßen Verfahrens vorgesehen sein können;
Figur 20 zeigt einen an die Schritte gemäß Figuren 19A und 19B anschließenden weiteren Schritt, wie er bei einer denkbaren Ausführungsform des erfindungsgemäßen Verfahrens vorgesehen sein kann;
Figuren 21A und 21B zeigen zwei erste Schritte, wie sie bei einer weiteren denkbaren Ausführungsform des erfindungsgemäßen Verfahrens vorgesehen sein können;
Figuren 22A und 22B zeigen zwei an die Schritte gemäß Figuren 21A und 21B anschließende weitere Schritte, wie sie bei einer denkbaren Ausführungsform des erfindungsgemäßen Verfahrens vorgesehen sein können;
Figuren 23A und 23B zeigen zwei an die Schritte gemäß Figuren 22A und 22B anschließende weitere Schritte, wie sie bei einer denkbaren Ausführungsform des erfindungsgemäßen Verfahrens vorgesehen sein können;
Figur 24 zeigt einen an die Schritte gemäß Figuren 23A und 23B anschließenden weiteren Schritt, wie er bei einer denkbaren Ausführungsform des erfindungsgemäßen Verfahrens vorgesehen sein kann.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

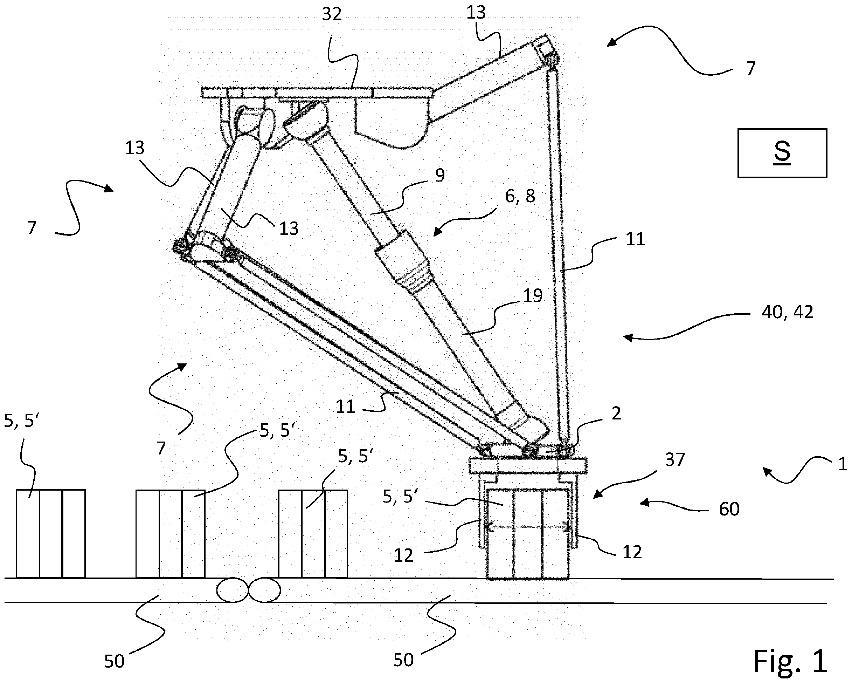

Figur 1 zeigt eine schematische Ansicht einer ersten Ausführungsform einer erfindungsgemäßen Vorrichtung 1. Die Vorrichtung 1 ist ausgebildet zum Manipulieren von Stückgütern 5, die in Figur 1 jeweils als mehrere zu einem Gebinde 5' zusammengefasste Getränkebehältnisse ausgebildet sind.

Bestandteil der Vorrichtung 1 ist ein Manipulator 40, der im Ausführungsbeispiel aus Figur 1 als Parallelkinematik-Roboter 42 bzw. Tripod ausgebildet ist. Somit umfasst der Parallelkinematik-Roboter 42 drei Arbeitsarme 7, die jeweils aus einem Oberarm 13 und einem gelenkig an den jeweiligen Oberarm 13 gekoppelten Unterarm 11 bestehen.

Weiter sind die Unterarme 11 jeweils durch zwei parallele Gestänge gebildet, die wiederum gelenkig an einer Basis 2 des Parallelkinematik-Roboters 42 befestigt sind.

Jedem der Arbeitsarme 7 ist ein eigener in den Figuren vorliegender Patentanmeldung nicht mit dargestellter Aktor zugeordnet, welcher seinen jeweiligen Arbeitsarm 7 drehend bewegen kann. Die Arbeitsarme 7 sowie ihre zugeordneten Aktoren sind an einer oberen Aufhängung 32 befestigt. Die Aktoren können in bevorzugten Ausführungsformen durch Servomotoren ausgebildet sein. An der Basis 2 sind hängend mehrere sich gegenüberliegende Klemm- und/oder Greifelemente 12 angeordnet, die als Bestandteil einer Klemm- und/oder Greifeinrichtung 60 des Parallelkinematik-Roboters 42 ausgebildet sind und mittels welcher mehrere Stückgüter 5 bzw. Gebinde 5`, wie nachfolgend noch beschrieben, entgegengenommen und in eine neue relative Anordnung gegenüber weiteren Stückgütern 5 bzw. Gebinden 5' gebracht werden können.

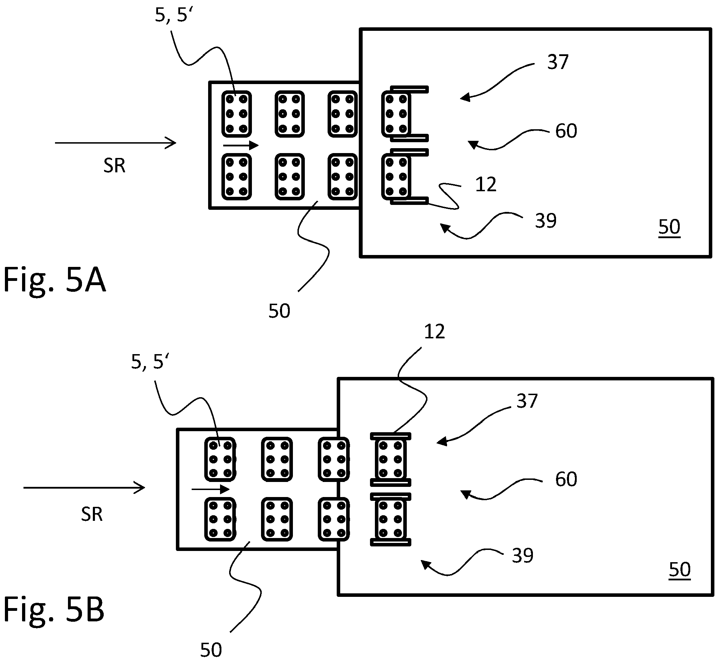

Figur 1 lässt hierbei zwei sich paarweise gegenüberliegende Klemm- und/oder Greifelemente 12 erkennen. In Richtung der Bildebene ist hinter dem in Figur 1 zu erkennenden Paar 37 an Klemm- und/oder Greifelementen 12 ein weiteres Paar 39 (vgl. Figur 5) an sich gegenüberliegenden Klemm- und/oder Greifelementen 12 angeordnet. Über jedes Paar 37 bzw. 39 sich gegenüberliegender Klemm- und/oder Greifelemente 12 kann mindestens ein Stückgut 5 bzw. Gebinde 5`, wie in Figur 1 zu erkennen, aus einem Stückgutstrom klemmend entgegengenommen werden.

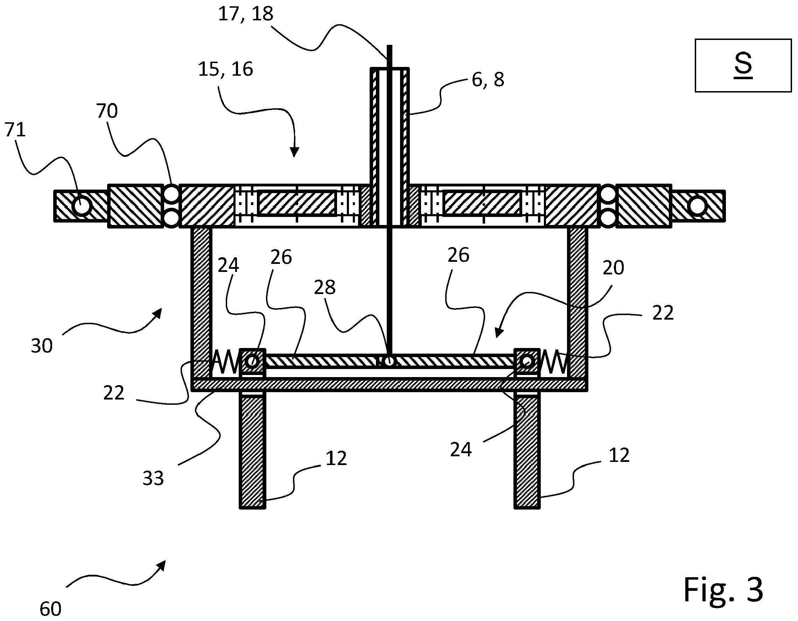

Der Parallelkinematik-Roboter 42 besitzt zudem eine Welle 6, die als Hohlwelle 8 ausgebildet und zwischen den Arbeitsarmen 7 positioniert ist. Die Welle 6 bzw. Hohlwelle 8 ist teleskopierbar und umfasst daher einen oberen Abschnitt 9 und einen unteren Abschnitt 19, die in Längsrichtung der Welle 6 bzw. Hohlwelle 8 relativ zueinander bewegt werden können. Der obere Abschnitt 9 ist an der oberen Aufhängung 32 gelenkig befestigt. Weiter steht der untere Abschnitt 19 der Welle 6 bzw. Hohlwelle 8 über ein Getriebe 15, wie es beispielhaft in Figur 3 zu erkennen ist, mit der Klemm- und/oder Greifeinrichtung 60 in mechanischer Verbindung, so dass die Klemm- und/oder Greifeinrichtung 60 mittels einer Rotationsbewegung der Welle 6 bzw. Hohlwelle 8 gedreht werden kann. Um die Drehbewegung zu ermöglichen, ist ein Lager 70 (vgl. Figur 3) vorgesehen. Ziffer 71 verweist zudem auf ein Aufhängungslager, welches die Basis 2 mit den Arbeitsarmen 7 bzw. einem jeweiligen Unterarm 11 der Arbeitsarme 7 verbindet.

Bestandteil der Vorrichtung 1 sind zudem mehrere Horizontalfördereinrichtungen 50, über welche ein aus einer Vielzahl an Stückgütern 5 bestehender Stückgutstrom in einen Erfassungsbereich des Manipulators 40 bzw. des Parallelkinematik-Roboters 42 gebracht werden kann. Der Stückgutstrom bzw. die Gebinde 5` können hierbei einen in den Figuren vorliegender Patentanmeldung nicht mit dargestellten Schrumpftunnel verlassen und hierauf folgend mittels der Horizontalfördereinrichtungen 50 einem Erfassungsbereich des Manipulators 40 zugeführt werden, welcher die Gebinde 5' in eine bestimmte relative Anordnung zueinander bringt, um aus dieser Anordnung mittels Verdichtung ihrer jeweiligen Gebinde 5' eine palettierfähige Lage herzustellen.

Die mehreren Horizontalfördereinrichtungen 50 werden beim Ausführungsbeispiel aus Figur 1 jeweils kontinuierlich bzw. unterbrechungsfrei betrieben. Zudem ist eine Steuerungseinrichtung S vorgesehen, welche mit dem Manipulator 40 in Verbindung steht und den Manipulator 40 bzw. die Arbeitsarme 7 des Manipulators 40 ansteuern kann, um mittels einer aufeinander abgestimmten Bewegung der Arbeitsarme 5 die Klemm- und/oder Greifeinrichtung 60 zu positionieren.

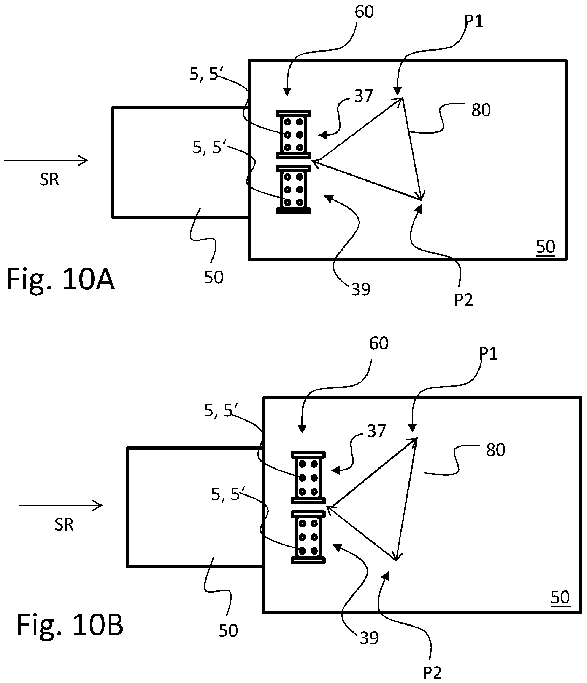

Auf der Steuerungseinrichtung S sind hierbei Informationen zu einer geschlossenen Arbeitsbahn 80 (vgl. Figur 10) bzw. Arbeitskurve abgelegt, entlang welcher die Klemm- und/oder Greifeinrichtung 60 durch eine aufeinander abgestimmte Bewegung der Arbeitsarme 7 verfahren wird, um hierbei einzelne Stückgüter 5 bzw. Gebinde 5' des Stückgutstromes in eine neue relative Anordnung gegenüber weiteren Stückgütern 5 bzw. Gebinden 5' zu überführen. Auf der Arbeitsbahn 80 sind, wie nachfolgend noch detailliert beschrieben, zwei unterschiedliche bestimmte Positionen P1 und P2 festgesetzt bzw. vorgegeben. Der Manipulator 40 bzw. der Parallelkinematik-Roboter 42 wird über die Steuerungseinrichtung S derart betätigt, dass die Klemm- und/oder Greifeinrichtung 60 die zwei unterschiedlichen Positionen P1 und P2 der Arbeitsbahn 80 jeweils anfährt und bei Erreichen einer jeweiligen der zwei unterschiedlichen Positionen P1 bzw. P2 jeweils mindestens ein entgegengenommenes Stückgut 5 bzw. Gebinde 5' freigibt.

Zur Freigabe mindestens eines Stückgutes 5 bzw. Gebindes 5` kann ein relativer Abstand der jeweiligen sich paarweise gegenüberliegenden Klemm- und/oder Greifelemente 12 zueinander vergrößert werden. Denkbar ist auch, dass zur Freigabe des jeweiligen mindestens einen Stückgutes 5 bzw. Gebindes 5` wenigstens eines der beiden sich paarweise gegenüberliegenden Klemm- und/oder Greifelemente 12 in Richtung nach oben geschwenkt wird. Durch das Schwenken der Klemm- und/oder Greifelemente 12 in Richtung nach oben kann nach Freigabe mindestens eines Stückgutes 5 bzw. Gebindes 5` einem ungewollten Kontakt der sich paarweise gegenüberliegenden Klemm- und/oder Greifelemente 12 mit einem Stückgut 5 während weiterer Bewegung der Klemm- und/oder Greifeinrichtung 60 entgegengewirkt werden.

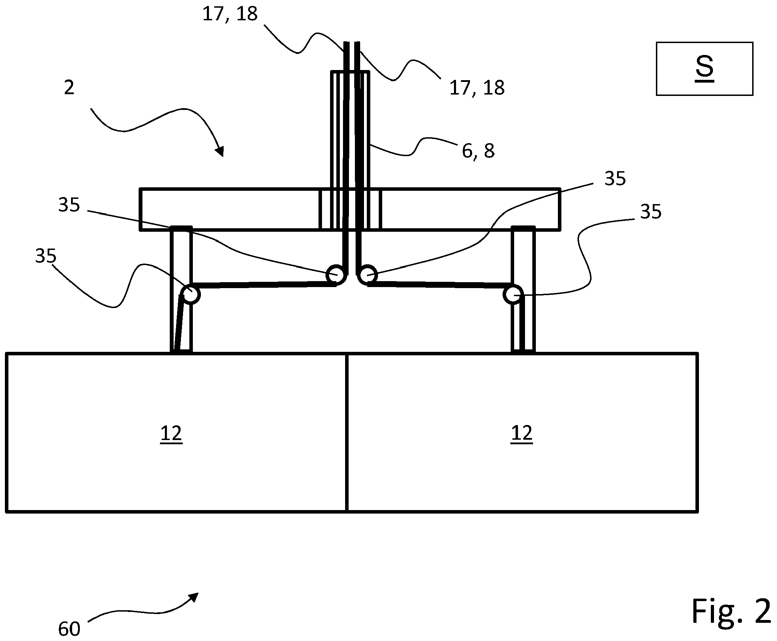

Figur 2 zeigt weitere Aspekte des Manipulators 40 bzw. der Klemm- und/oder Greifeinrichtung 60 des Ausführungsbeispiels gemäß Figur 1. Aus Gründen der Übersichtlichkeit sind die Horizontalfördereinrichtungen 50 in den Figuren 2 bis 4 nicht mit dargestellt.

Figur 2 zeigt lässt erkennen, dass die Klemm- und/oder Greifeinrichtung 60 zwei nebeneinander angeordnete Klemm- und/oder Greifelemente 12 besitzt. Jedem der in Figur 2 zu erkennenden Klemm- und/oder Greifelemente 12 ist ein weiteres Klemm- und/oder Greifelement 12 zugeordnet, welches dem jeweiligen in Figur 2 zu erkennenden Klemm- und/oder Greifelement 12 gegenüberliegt (in Figur 2 in die Bildebene hinein versetzt hinter den sichtbaren Greifelementen).

Die Klemm- und/oder Greifelemente 12, wie sie in Figur 2 zu erkennen sind, wirken daher jeweils paarweise mit einem weiteren gegenüberliegenden Klemm- und/oder Greifelement 12 zusammen, um jeweils mindestens ein Stückgut 5 bzw. Gebinde 5' entgegenzunehmen, gegenüber weiteren Stückgütern 5 bzw. Gebinden 5' zu versetzen, zeitlich hierauf folgend freizugeben und hierdurch eine neue relative Anordnung der entgegengenommenen Stückgüter 5 bzw. Gebinde 5` gegenüber weiteren Stückgütern 5 bzw. Gebinden 5' herzustellen.

Durch die Welle 6 bzw. Hohlwelle 8 sind zwei Betätigungselemente 17 geführt, die jeweils als strangförmiges flexibles Zugelement 18 ausgebildet sind. Die Betätigungselemente 17 bzw. strangförmigen flexiblen Zugelemente 18 verlaufen jeweils über mehrere Umlenkrollen 35. Jedem der zwei sich paarweise gegenüberliegenden Klemm- und/oder Greifelemente 12 ist eines der Betätigungselemente 17 bzw. eines der strangförmigen flexiblen Zugelemente 18 zugeordnet, so dass die jeweiligen sich paarweise gegenüberliegenden Klemm- und/oder Greifelemente 12 über das jeweilige zugeordnete Betätigungselement 17 zur Freigabe des jeweiligen entgegengenommenen mindestens einen Stückgutes 5 bzw. Gebindes 5' angesteuert werden können. Nachdem das jeweilige entgegengenommene Stückgut 5 bzw. Gebinde 5` freigegeben wurde, können die jeweiligen sich paarweise gegenüberliegenden Klemm- und/oder Greifelemente 12 über die Betätigungselemente 17 zum Ausführen einer Zustellbewegung angesteuert werden, um weitere Stückgüter 5 bzw. Gebinde 5' entgegenzunehmen. Der jeweilige Klemmmechanismus kann alternativ auch durch eine (bzw. zwei) zur Welle 6 konzentrisch angeordnete Wellen über ein Getriebe oder über einen an der Basis 2 angeordneten Antrieb betätigt werden (nicht gezeigt).

Figur 3 zeigt weitere Aspekte des Manipulators 60 der Ausführungsform gemäß den Figuren 1 und 2. Insbesondere zeigt Figur 3 einen Querschnitt durch eine Klemm- und/oder Greifeinrichtung 60, wie sie bei denkbaren Ausführungsformen einer erfindungsgemäßen Vorrichtung 1 (vgl. Figur 1) vorgesehen sein kann. Zu erkennen ist die in Figur 1 bereits dargestellte und beschriebene Welle 6, die als Hohlwelle 8 ausgebildet ist. Die Welle 6 bzw. Hohlwelle 8 steht über ein Getriebe 15 mit einem Gehäuse 30 bzw. Gerüst der Klemm- und/oder Greifeinrichtung 60 in Verbindung, so dass die Klemm- und/oder Greifeinrichtung 60 mittels einer drehenden Bewegung der Welle 6 bzw. Hohlwelle 8 rotierend bewegt werden kann. Hierdurch können Stückgüter 5 (vgl. Figur 1) bzw. Gebinde 5' um eine vertikale Achse gedreht werden, um diese ggf. in eine passende Ausrichtung zu bringen. Zusammen mit dem Gehäuse 30 werden die beiden sich paarweise gegenüberliegenden Klemm- und/oder Greifelemente 12 sowie die über die sich paarweise gegenüberliegenden Klemm- und/oder Greifelemente 12 aufgenommenen Stückgüter 5 bzw. Gebinde 5` um die vertikale Achse gedreht.

Das Getriebe 15 ist vorliegend als Planetengetriebe 16 ausgebildet. Denkbar ist auch, dass die Welle 6 bzw. Hohlwelle 8 drehfest mit dem Gehäuse 30 bzw. der Klemm- und/oder Greifeinrichtung 60 in Verbindung steht, um die Klemm- und/oder Greifeinrichtung 60 rotierend zu bewegen. Die Welle 6 bzw. Hohlwelle 8 weist am oberen und unteren Ende jeweils ein nicht gezeigtes Kardangelenk auf und ist teleskopierbar, um eine mittels der Arbeitsarme 7 bewirkte Bewegung der Klemm- und/oder Greifeinrichtung 60 entlang der geschlossenen Arbeitsbahn 80 auszugleichen.

Die Klemm- und/oder Greifeinrichtung 60 besitzt, wie bereits erwähnt, mehrere sich jeweils paarweise gegenüberliegende Klemm- und/oder Greifelemente 12 zum klemmenden Erfassen und Loslassen von Stückgütern 5 bzw. Gebinden 5`. Die sich gegenüberliegenden Breitseitenflächen der Klemm- und/oder Greifelemente 12 sind, wie in Figur 3 zu erkennen, plan ausgebildet. Zudem sind die sich paarweise gegenüberliegenden Klemm- und/oder Greifelemente 12 jeweils an einer Linearführung 33 aufgehängt, die als Bestandteil des Gehäuses 30 bzw. des Gerüstes der Klemm- und/oder Greifeinrichtung 60 ausgebildet ist und eine im Wesentlichen horizontale Orientierung besitzt. Bei einem über das jeweilige Betätigungselement 17 bzw. das jeweilige strangförmige flexible Zugelement 18 bewirkten Versatz bzw. relativer Bewegung der Klemm- und/oder Greifelemente 12 zueinander, werden diese somit bei Ausführungsform gemäß Figur 3 in linearer Richtung bewegt.

Jedes Klemm- und/oder Greifelement 12 steht über ein jeweiliges Gelenk 24 mit einem eigenen Hebel 26 in Verbindung, welche Hebel 26 wiederum im Bereich ihres dem jeweiligen zugeordneten Klemm- und/oder Greifelement 12 abgewandten Endes über ein Gelenk 28 miteinander gekoppelt sind. Die beiden Hebel 26 sowie die Gelenke 24 und 28 bilden eine Übertragungseinrichtung 20, wobei unter Zuhilfenahme der Übertragungseinrichtung 20 mittels einer linearen Stellbewegung des jeweiligen Betätigungselementes 17 ein Versatz der jeweiligen sich paarweise gegenüberliegenden Klemm- und/oder Greifelemente 12 bewirkt werden kann. Die Drehachsen der Gelenke 24 und 28 sind parallel zueinander orientiert. Weiter besitzen die Drehachsen der Gelenke 24 und 28 eine lotrechte Orientierung zur Bewegungsrichtung der Klemm- und/oder Greifelemente 12 bei Versatz entlang der als Bestandteil des Gehäuses 30 bzw. Gerüstes ausgebildeten Linearführung 33.

Mit dem Gelenk 28 steht zudem das Betätigungselement 17 in Verbindung, welches eine Stellbewegung in linearer Richtung ausführen kann. Das Betätigungselement 17 wird hierzu in linearer Richtung nach oben bewegt. Nach dem Versatz stehen sich paarweise gegenüberliegende Klemm- und/oder Greifelemente, wie in Figur 1 zu erkennen, mit mindestens einem Stückgut 5 bzw. Gebinde 5' in Oberflächenkontakt, wobei das jeweilige mindestens eine Stückgut 5 bzw. Gebinde 5` über ein jeweiliges Paar 37 bzw. 39 (vgl. Figur 5) an sich gegenüberliegenden Klemm- und/oder Greifelementen 12 an der Klemm- und/oder Greifeinrichtung 60 gehalten wird. In Figur 3 ist lediglich ein Betätigungselement 17 zu erkennen. Ein weiteres Betätigungselement 17 wird durch das in Figur 3 zu erkennende Betätigungselement 17 verdeckt.

Um die Klemm- und/oder Greifelemente 12 zum Freigeben eines jeweiligen entgegengenommenen Stückgutes 5 bzw. Gebindes 5` zueinander beabstanden zu können, stehen die Klemm- und/oder Greifelemente 12 jeweils mit einer Zugfeder 22 in Verbindung. Die Zugfedern 22 sind am Gehäuse 30 bzw. Gerüst der Klemm- und/oder Greifeinrichtung 60 sowie an den Klemm- und/oder Greifelementen 12 direkt befestigt.

Alternativ dazu könnten die Klemm- und/oder Greifelemente 12 auch schwenkbar gelagert sein, so dass sie - wie eingangs erwähnt - jeweils voneinander weg gehend auseinander geschwenkt werden können. Ebenfalls ist an andere Bewegungen gedacht: eine kombinierte Bewegung aus Schwenken und translatorischer Verschiebung oder entlang einer Kurve (nicht gezeigt).

Die Steuerungseinrichtung S kann zum Freigeben des über sich paarweise gegenüberliegende Klemm- und/oder Greifelemente 12 aufgenommenen mindestens einen Stückgutes 5 bzw. Gebindes 5' eine auf das Betätigungselement 17 aufgebrachte Zugkraft aufheben, woraus resultierend die Klemm- und/oder Greifelemente 12 durch die jeweiligen Zugfedern 22 selbständig in die stabile Lageposition gemäß Figur 3 zurück versetzt werden.

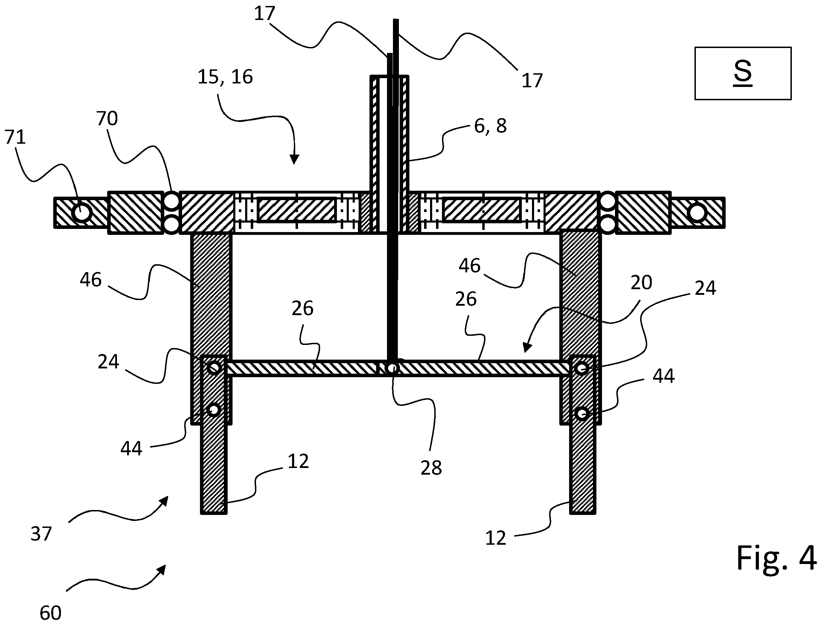

Figur 4 zeigt eine schematische Ansicht einer Ausführungsform einer Klemm- und/oder Greifeinrichtung 60, wie sie für die erfindungsgemäße Vorrichtung 1 vorgesehen sein kann. Auch die Klemm- und/oder Greifeinrichtung 60 aus dem Ausführungsbeispiel aus Figur 4 besitzt zwei Paare 37 und 39 an sich gegenüberliegenden Klemm- und/oder Greifelementen 12. Ein solches Paar 37 an sich gegenüberliegenden Klemm- und/oder Greifelementen 12 ist in Figur 4 zu erkennen, ein weiteres Paar 39 befindet sich hinter dem in Figur 4 zu erkennenden Paar 37 an Klemm- und/oder Greifelementen 12 und wird durch das in Figur 4 zu erkennende Paar 37 verdeckt. Die Klemm- und/oder Greifelemente 12 sind jeweils über eine Schwenkachse 44 bzw. einen Bolzen drehbeweglich an einer Tragsäule 46 aufgehängt.

Jedem Paar 37 bzw. 39 an Klemm- und/oder Greifelementen 12 ist ein eigenes Betätigungselement 17 zugeordnet, welche Betätigungselemente 17 im Ausführungsbeispiel aus Figur 4 starr oder im Wesentlichen starr ausgebildet sind. Somit können die Paare 37 bzw. 39 sich gegenüberliegender Klemm- und/oder Greifelemente 12 zum Freigeben des jeweiligen mindestens einen Stückgutes 5 über ein jeweiliges Betätigungselement 17 unabhängig voneinander angesteuert werden. Die beiden Betätigungselemente 17 können hierzu unabhängig voneinander über einen nicht dargestellten Aktor linear und in Richtung nach oben bewegt werden. Jedes der Betätigungselemente 17 steht zudem über ein Gelenk 28 mit zwei Hebeln 26 in Verbindung. Die Hebel 26 sind weiterhin über ein Gelenk 24 an ein jeweiliges Klemm- und/oder Greifelement 12 gekoppelt. Durch die drehbewegliche Befestigung der Klemm- und/oder Greifelemente 12 an die Tragsäulen 46 sowie die Koppelung der Klemm- und/oder Greifelemente 12 über die Hebel 26 an die Betätigungselemente 17 können die Klemm- und/oder Greifelemente 12 durch eine lineare Stellbewegung eines Betätigungselementes 17 in Richtung nach oben um ihre jeweilige Schwenkachse 44 gedreht werden und ein jeweiliges Stückgut 5 bzw. Gebinde 5' freigeben.

Sofern nachfolgend mindestens ein Stückgut 5 bzw. Gebinde 5` über ein jeweiliges Paar 37 bzw. 39 sich gegenüberliegender Klemm- und/oder Greifelemente 12 entgegengenommen werden soll, wird hierzu das jeweilige Paar 37 bzw. 39 sich gegenüberliegender Klemm- und/oder Greifelemente 12 in die in Figur 4 zu erkennende Position zurückgeführt. Das jeweilige Betätigungselement 17, mit welchem das jeweilige Paar 37 bzw. 39 sich gegenüberliegender Klemm- und/oder Greifelemente 12 über die jeweiligen Hebel 26 in Verbindung steht, wird hierzu in linearer Richtung nach unten bewegt. Durch die starre Ausbildung der Betätigungselemente 17 wird hierbei das jeweilige Paar 37 bzw. 39 an sich gegenüberliegenden Klemm- und/oder Greifelemente 12 um die jeweiligen Schwenkachsen 44 gedreht, bis es die in Figur 4 gezeigte Position erreicht. Die planen einander zugewandten Kontaktflächen des jeweiligen Paares 37 bzw. 39 an sich gegenüberliegenden Klemm- und/oder Greifelementen 12 sind bei der Position gemäß Figur 4 parallel zueinander orientiert. Insbesondere befinden sich die Schwenkachsen 44 in einer Ebene außerhalb einer Ebene, in welcher Stückgüter transportiert werden. Somit ist ein Positionieren eines Klemmelements oberhalb von Stückgütern 5 möglich, ohne diese zu berühren.

Gemäß dem Ausführungsbeispiel aus Figur 3 ist auch bei dem Ausführungsbeispiel aus Figur 4 eine Welle 6 vorgesehen, welche als Hohlwelle 8 ausgebildet ist und die beiden Betätigungselemente 17 aufnimmt. Ebenso steht bei dem Ausführungsbeispiel aus Figur 4 die Welle 6 bzw. Hohlwelle 8 über ein Getriebe 15, welches als Planetengetriebe 16 ausgebildet ist, mit der Klemm -und/oder Greifeinrichtung 60 in mechanischer Verbindung, so dass die Klemm- und/oder Greifeinrichtung 60 mittels einer Rotationsbewegung der Welle 6 bzw. Hohlwelle 8 gedreht werden kann.

Der Mechanismus mit den Zugelementen 17 kann auch durch einen anderen Mechanismus oder Antrieb zum Drehen der Greifelemente 12 ersetzt werden. (nicht gezeigt).

Figuren 5A und 5B zeigen zwei erste Schritte, wie sie bei einer denkbaren Ausführungsform des erfindungsgemäßen Verfahrens vorgesehen sein können. Das Verfahren, wie es in den nachfolgenden Ausführungsformen beschrieben wird, ist vorgesehen zum Umgang mit Stückgütern 5 bzw. vorliegend zum Umgang mit Gebinden 5'.

Figur 5A zeigt hierbei, dass zwei Paare 37 und 39 sich gegenüberliegender Klemm- und/oder Greifelemente 12 in einem ersten Schritt zwischen sich eine jeweilige fluchtend zu einer Strömungsrichtung SR eines jeweiligen entgegenzunehmenden Stückgutes 5 positionierte Aufnahme ausbilden. Eine Zusammenschau der Figuren 5A und 5B verdeutlicht zudem, dass sich ein jeweiliges Stückgut 5 bzw. 5' in die Aufnahme bzw. zwischen das jeweilige Paar 37 bzw. 39 sich gegenüberliegender Klemm- und/oder Greifelemente 12 bewegt. Die Klemm- und/oder Greifelemente 12 sind, wie vorherig zu den Ausführungsbeispielen aus Figuren 1 bis 4 beschrieben, Bestandteil einer Klemm- und/oder Greifeinrichtung 60 bzw. eines Manipulators 40 (vgl. Figur 1). In Figur 5a befinden sich die Klemm- und/oder Greifelemente 12 bzw. der Manipulator 40 in einer Startposition.

Die Klemm- und/oder Greifeinrichtung 60 wird zur Aufnahme der Stückgüter 5 selbst nicht bewegt bzw. bleibt ortsfest in ihrer jeweiligen Position, so dass die Stückgüter 5 aufgrund ihrer Eigenbewegung zwischen die Paare 37 bzw. 39 sich gegenüberliegender Klemm- und/oder Greifelemente 12 strömen. Ist ein jeweiliges Stückgut 5 bzw. Gebinde 5` sodann zwischen einem jeweiligen Paar 37 bzw. 39 sich gegenüberliegender Klemm- und/oder Greifelemente 12 positioniert, treten zeitlich hierauf folgend die Klemm- und/oder Greifelemente 12 des jeweiligen Pares 37 bzw. 39 kraftbeaufschlagt mit ihrem jeweiligen Stückgut 5 bzw. Gebinde 5' in Anlage, so dass das jeweilige Stückgut 5 bzw. Gebinde 5` klemmend durch das jeweilige Paar 37 bzw. 39 sich gegenüberliegender Klemm- und/oder Greifelemente 12 gehalten wird.

Der Transport bzw. die Bewegung der Stückgüter 5 bzw. Gebinde 5' in Strömungsrichtung SR erfolgt, wie vorhergehend beschrieben, mittels Horizontalfördereinrichtungen 50, auf welchen die Stückgüter 5 in zwei parallelen Reihen aufstehen. In Strömungsrichtung SR aufeinanderfolgende Stückgüter 5 bzw. Gebinde 5' sind in Strömungsrichtung SR zueinander beabstandet.

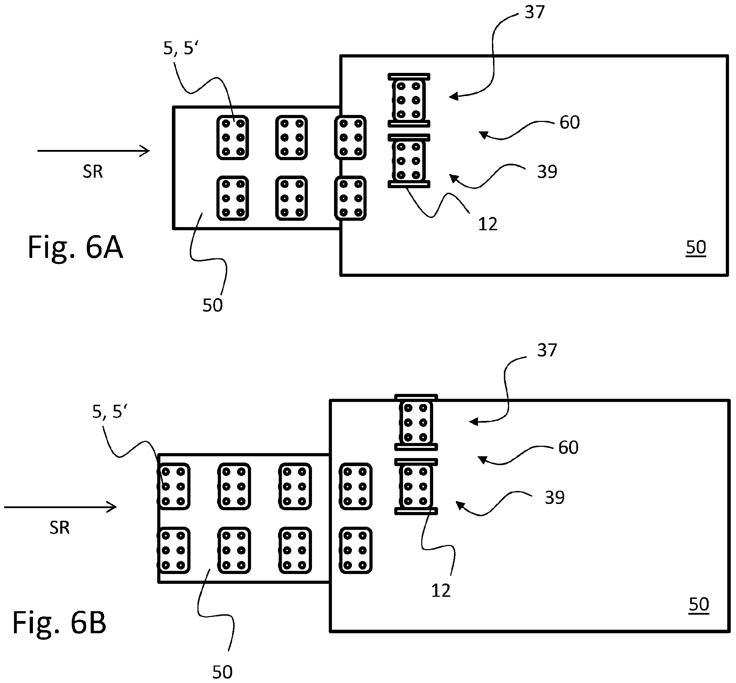

Figuren 6A und 6B zeigen zwei an die Schritte gemäß Figuren 5 zeitlich anschließende weitere Schritte, wie sie bei einer denkbaren Ausführungsform des erfindungsgemäßen Verfahrens vorgesehen sein können. Wie soeben erwähnt, sind die zwischen den Paaren 37 bzw. 39 sich gegenüberliegender Klemm- und/oder Greifelemente 12 positionierten Stückgüter 5 bzw. Gebinde 5` via die Klemm- und/oder Greifelemente 12 gehalten, so dass eine lösbare Verbindung zwischen den Klemm- und/oder Greifelementen 12 und den zwischen den Klemm -und/oder Greifelementen 12 gehaltenen Stückgütern 5 bzw. Gebinden 5' hergestellt ist.

Wie eine Zusammenschau der Figuren 5B und 6A verdeutlicht, wird die Greifeinrichtung 60 zusammen mit den gehaltenen Stückgütern 5 bzw. Gebinden 5' schräg zur Strömungsrichtung SR bewegt. Die Bewegung der Greifeinrichtung 60 folgt hierbei einer geschlossenen Arbeitsbahn 80, wie sie gesamthaft in Figur 10A zu erkennen ist. Mittels der Bewegung gemäß Figur 6A und 6B fährt die Greifeinrichtung 60 eine Position P1 von zwei unterschiedlichen bestimmten Positionen P1 und P2 an, welche Positionen P1 und P2 entlang der geschlossenen Arbeitsbahn 80 festgesetzt sind.

In Figur 6A hat die Greifeinrichtung 60 die erste Position P1 (vgl. Figur 10A) erreicht. Während die Greifeinrichtung 60 sich in Richtung der ersten Position P1 bewegt, werden weitere und nicht über die Greifeinrichtung 60 entgegengenommene Stückgüter 5 bzw. Gebinde 5` zeitsynchron über die Horizontalfördereinrichtungen 50 in Strömungsrichtung SR gefahren.

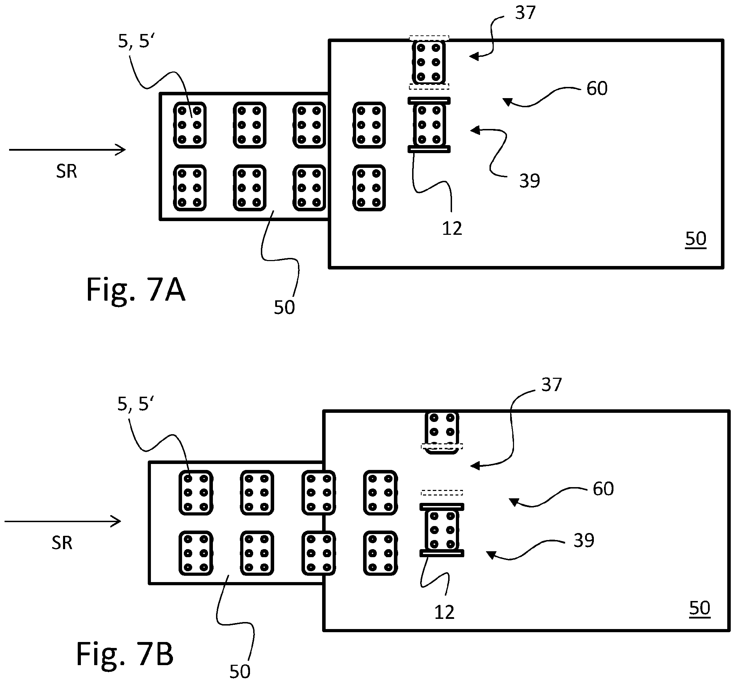

Figuren 7A und 7B zeigen zwei an die Schritte gemäß Figuren 6 zeitlich anschließende weitere Schritte, wie sie bei einer denkbaren Ausführungsform des erfindungsgemäßen Verfahrens vorgesehen sein können. Wie in Figur 7A über Phantomlinien angedeutet, wird das mittels des ersten Paares 37 sich gegenüberliegender Klemm- und/oder Greifelemente 12 gehaltene Stückgut 5 bzw. Gebinde 5' freigegeben, sobald die Greifeinrichtung 60 die erste Position P1 (vgl. Figur 10) der geschlossenen Arbeitsbahn 80 erreicht. Die weitere Bewegung der Greifeinrichtung 60 wird durch eine Zusammenschau der Figuren 7A und 7B verdeutlicht. So erfolgt die Bewegung der Greifeinrichtung 60 nach Freigabe der über das erste Paar 37 sich gegenüberliegender Greifelemente 12 gehaltene Stückgut 5 bzw. Gebinde 5` linear in Richtung der zweiten Position P2. Das zwischen dem zweiten Paar 39 sich gegenüberliegender Klemm- und/oder Greifelemente 12 positionierte Stückgut 5 bzw. Gebinde 5` wird weiterhin an der Klemm- und/oder Greifeinrichtung 60 gehalten, so dass das zwischen dem zweiten Paar 39 sich gegenüberliegender Klemm- und/oder Greifelemente 12 positionierte Stückgut 5 bzw. Gebinde 5' zusammen mit der Klemm- und/oder Greifeinrichtung 60 linear in Richtung der zweiten Position P2 bewegt wird.

Für Verfahrensschritte, wie sie im Ausführungsbeispiel aus Figuren 7A und 7B gezeigt sind, hat es sich bewährt, sofern die Klemm- und/oder Greifelemente 12 der Greifeinrichtung 60 zur Freigabe eines jeweiligen Stückgutes 5 in Richtung nach oben bewegt und insbesondere in Richtung nach oben geschwenkt werden können. Hierdurch kann einem ungewollten Kontakt von Klemm- und/oder Greifelementen 12 zu Stückgütern 5 bei einer Bewegung der Klemm- und/oder Greifeinrichtung 60 entlang ihrer geschlossenen Arbeitsbahn 80 bzw. bei einer Bewegung der Klemm- und/oder Greifeinrichtung 60 von der ersten Position P1 in Richtung der zweiten Position P2 (vgl.

Figur 10) entgegengewirkt werden. Die Klemm-und/oder Greifeinrichtung 60 kann hierzu beispielsweise gemäß vorheriger Beschreibung zum Ausführungsbeispiel aus Figur 4 ausgebildet sein.

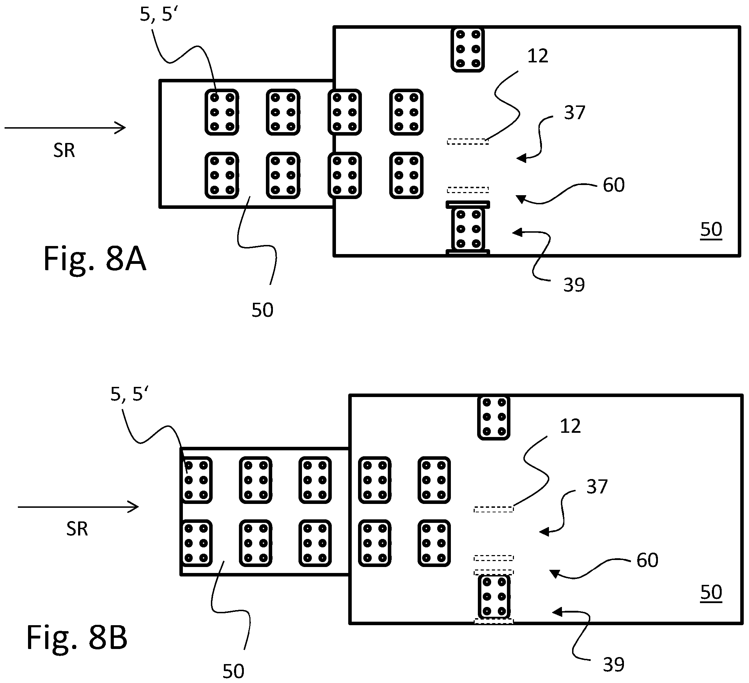

Figuren 8A und 8B zeigen zwei an die Schritte gemäß Figuren 7 zeitlich anschließende weitere Schritte, wie sie bei einer denkbaren Ausführungsform des erfindungsgemäßen Verfahrens vorgesehen sein können. In Figur 8A hat die Klemm- und/oder Greifeinrichtung 60 die zweite Position P2 erreicht. Das über das Paar 39 sich gegenüberliegender Klemm- und/oder Greifelemente 12 gehaltene Stückgut 5 befindet sich nun in einer für dieses Stückgut 5 vorgesehenen relativen Anordnung gegenüber weiteren Stückgütern 5, welche weiteren Stückgüter 5 über die

Horizontalfördereinrichtungen 50 in Strömungsrichtung SR bewegt werden. In Figur 8B wird mittels Phantomlinien der Klemm- und/oder Greifelemente 12 des Paares 39 eine Freigabe des über das Paar 39 gehaltenen Stückgutes 5 bzw. Gebindes 5' angedeutet.

Um nach Freigabe des Stückgutes 5 und weiterer Bewegung der Klemm- und/oder Greifeinrichtung 60 nicht ungewollt mit Stückgütern 5 in Kontakt zu treten und hierbei ggf. Stückgüter ungewollt zu verschieben, haben sich Ausführungsformen bewährt, bei welchen auch die Klemm- und/oder Greifelemente 12 des zweiten Paares 39 bei bzw. zur Freigabe des jeweiligen Stückgutes 5 jeweils in Richtung nach oben bewegt und insbesondere jeweils in Richtung nach oben geschwenkt werden.

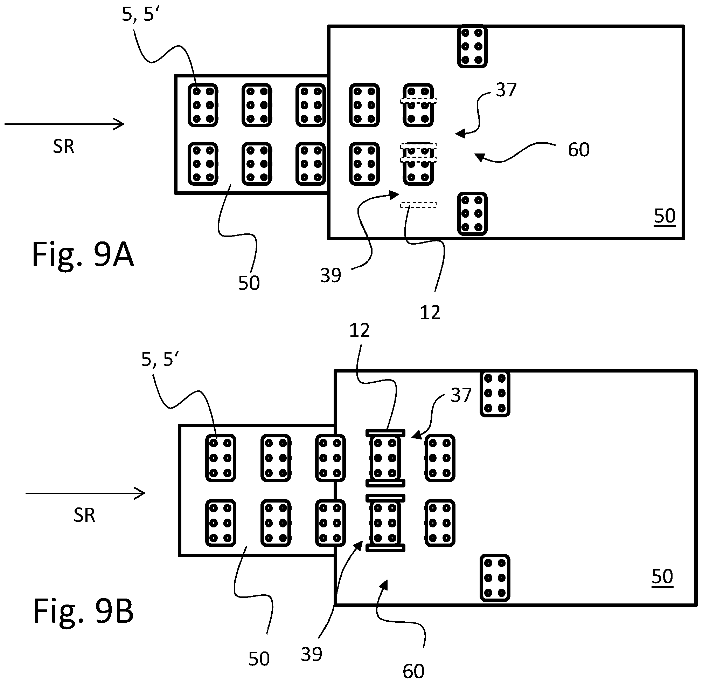

Figuren 9A und 9B zeigen zwei an die Schritte gemäß Figuren 8 zeitlich anschließende weitere Schritte, wie sie bei einer denkbaren Ausführungsform des erfindungsgemäßen Verfahrens vorgesehen sein können. In Figur 9A wird die Klemm- und/oder Greifeinrichtung 60 in Richtung der in Figur 5A gezeigten und bereits beschriebenen Ausgangsposition zurückbewegt, um von dort weitere Stückgüter entgegenzunehmen, sich nach Entgegennahme sodann gemäß Beschreibung zu Figuren 5 bis 8 entlang der Arbeitsbahn 80 zu bewegen und bei erneutem Erreichen der beiden entlang der Arbeitsbahn 80 festgesetzten Positionen P1 und P2 jeweils ein Stückgut 5 freizugeben. In Figur 9B hat die Klemm- und/oder Greifeinrichtung 60 die Ausgangsposition gemäß Figur 5A erreicht. Über die Klemm- und/oder Greifelemente 12 bzw. über die Paare 37 und 39 sich gegenüberliegender Klemm- und/oder Greifelemente 12 sind in Figur 9B bereits Stückgüter 5 an der Klemm- und/oder Greifeinrichtung 60 festgesetzt.

Da die Klemm- und/oder Greifelemente 12 in der Position der Klemm- und/oder Greifeinrichtung 60 gemäß Figur 9A bereits nach oben geschwenkt wurden, können die Klemm- und/oder Greifelemente 12 nicht ungewollt mit Stückgütern 5 in Kontakt treten und diese ggf. ungewollt verschieben. Spätestens bei Entgegennahme weiterer Stückgüter 5 gemäß Figur 9B müssen die Klemm- und/oder Greifelemente 12 beider Paare 37 und 39 in Richtung nach unten zurückgeschwenkt sein, um weitere Stückgüter 5 bzw. Gebinde 5`, wie in Figur 9B gezeigt, entgegennehmen zu können.

Figuren 10 verdeutlichen die Bewegungen der Klemm- und/oder Greifeinrichtung 60, wie sie in denkbaren Ausführungsformen des erfindungsgemäßen Verfahrens vorgesehen sein kann. Die Klemm- und/oder Greifeinrichtung 60 befindet sich in Figuren 10 jeweils in einer Ausgangsposition, wie sie beispielhaft bereits in Figur 5A bzw. Figur 9A dargestellt wurde. Zwischen den Paaren 37 und 39 sich gegenüberliegender Klemm- und/oder Greifelemente 12 ist jeweils ein Stückgut 5 gehalten. Weitere Stückgüter 5, welche mittels der Horizontalfördereinrichtungen 50 kontinuierlich bewegt werden, sind in Figuren 10 aus Gründen der Übersichtlichkeit nicht mit dargestellt.

Insbesondere sind in Figuren 10 beispielhafte Ausgestaltungen für eine geschlossene Arbeitsbahn 80 zu erkennen. Auf der geschlossenen Arbeitsbahn 80 gemäß Figur 10A und auf der geschlossenen Arbeitsbahn gemäß Ausführung aus Figur 10B sind jeweils zwei Positionen P1 und P2 festgesetzt, welche die Klemm- und/oder Greifeinrichtung 60 zeitlich nacheinander anfährt, wobei die Klemm- und/oder Greifeinrichtung 60 bei Erreichen einer jeweiligen der zwei unterschiedlichen Positionen P1 und P2 jeweils ein entgegengenommenes Stückgut 5 bzw. Gebinde 5' freigibt. Somit können bei einer umlaufenden Bewegung der Klemm- und/oder Greifeinrichtung 60 entlang der geschlossenen Arbeitsbahn 80 zwei Stückgüter 5 bzw. Gebinde 5' zu unterschiedlichen Zeitpunkten manipuliert werden, wodurch mittels des Verfahrens Stückgüter 5 bzw. Gebinde 5' mit hohem Durchsatz in eine neue relative Anordnung gegenüber weiteren Stückgütern 5 bzw. Gebinden 5' gebracht werden können.

Informationen zur geschlossenen Arbeitsbahn 80, wie sie beispielhaft in Figuren 10 gezeigt sind, können auf einer Steuerungseinrichtung S gemäß vorheriger Beschreibung zum Manipulator 40 in Figur 1 hinterlegt sein.

Wie Figuren 10 weiterhin unter Berücksichtigung der geschlossenen Arbeitsbahnen 80 erkennen lassen, erfolgt eine Bewegung der Klemm- und/oder Greifeinrichtung 60 durchgehend schräg zur über die Horizontalfördereinrichtungen 50 bewirkten Strömungsrichtung SR der Stückgüter 5 bzw. Gebinde 5`. Weiter erfolgt die Bewegung der Klemm- und/oder Greifeinrichtung 60 entlang der geschlossenen Arbeitsbahn 80 durchgehend linear, so dass die Klemm- und/oder Greifeinrichtung 60 sich auf kürzestem Wege zu den beiden Positionen P1 und P2 sowie hierauf folgend zurück in Richtung der in Figuren 10 jeweils gezeigten Ausgangsposition bewegt. Auch hierdurch lässt sich ein Durchsatz bei einer Manipulation von Stückgütern 5 bzw. 5` erhöhen.

Gegenüber Figur 10A wird die Klemm- und/oder Greifeinrichtung 60 mittels der geschlossenen Arbeitsbahn 80 in Figur 10B nach Erreichen der ersten Position P1 mit einer Bewegungskomponente bereits in Richtung der Ausgangsposition zurück bewegt. Hingegen entfernt sich die Klemm- und/oder Greifeinrichtung 60 in Figur 10A unmittelbar nach Erreichen der ersten Position P1 weiter von der Ausgangsposition weg. Die geschlossenen Arbeitsbahnen 80 bzw. eine Geometrie und ein Verlauf der geschlossenen Arbeitsbahnen 80 kann in Abhängigkeit einer aus den Stückgütern 5 zu bildenden Anordnung vorgegeben werden. Die Ausgestaltungen der geschlossenen Arbeitsbahnen 80 gemäß Figuren 10A und 10B ist daher lediglich beispielhaft zu verstehen.

Aus Gründen der Vollständigkeit wird darauf hingewiesen, dass für denkbare weitere Ausführungsformen auch mehr als zwei Positionen P1 bzw. P2 vorgesehen sein können, wobei die Klemm- und/oder Greifeinrichtung 60 bei Erreichen einer jeweiligen Position jeweils mindestens ein entgegengenommenes Stückgut 5 bzw. Gebinde 5' freigibt. Die Paare 37 bzw. 39 sich gegenüberliegender Klemm- und/oder Greifelemente 12 können hierbei mindestens der Anzahl an Positionen P1 bzw. P2 entsprechen, welche die Klemm- und/oder Greifeinrichtung 60 anfährt. Die geschlossene Arbeitsbahn 80 kann hierbei bevorzugt eine mehreckige bzw. polygone Geometrie besitzen. Die Klemm- und/oder Greifeinrichtung 60 kann bevorzugt durchgehend linear bewegt bzw. verfahren werden.

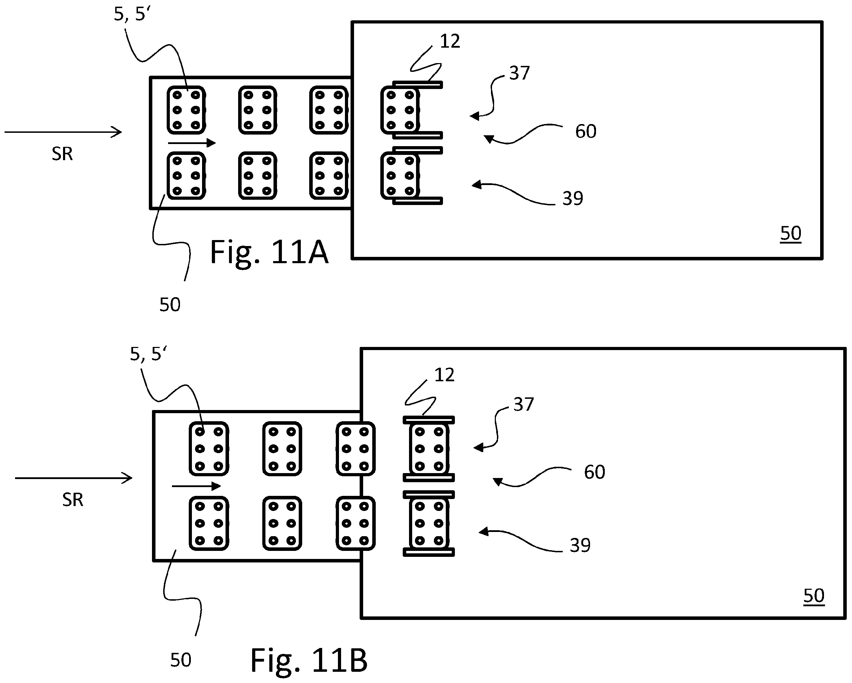

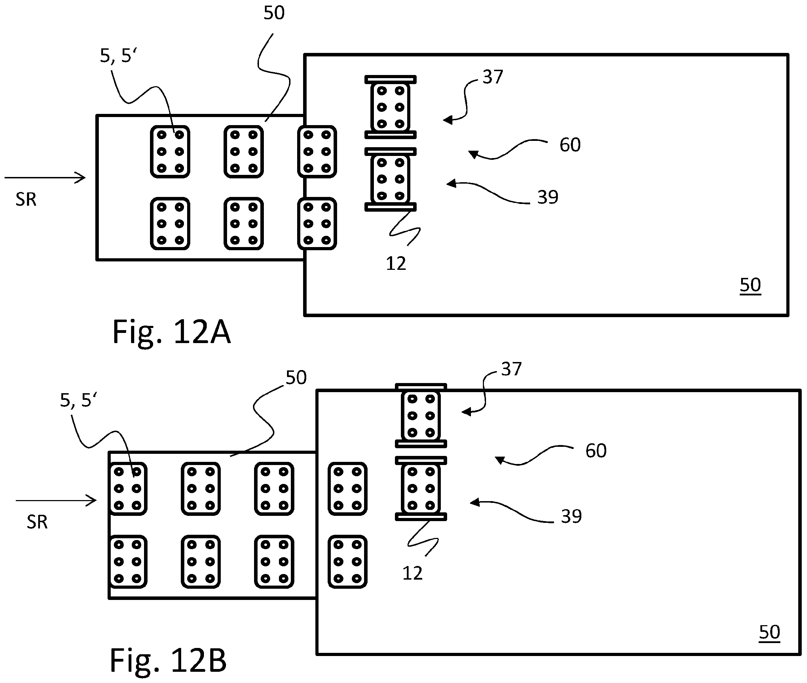

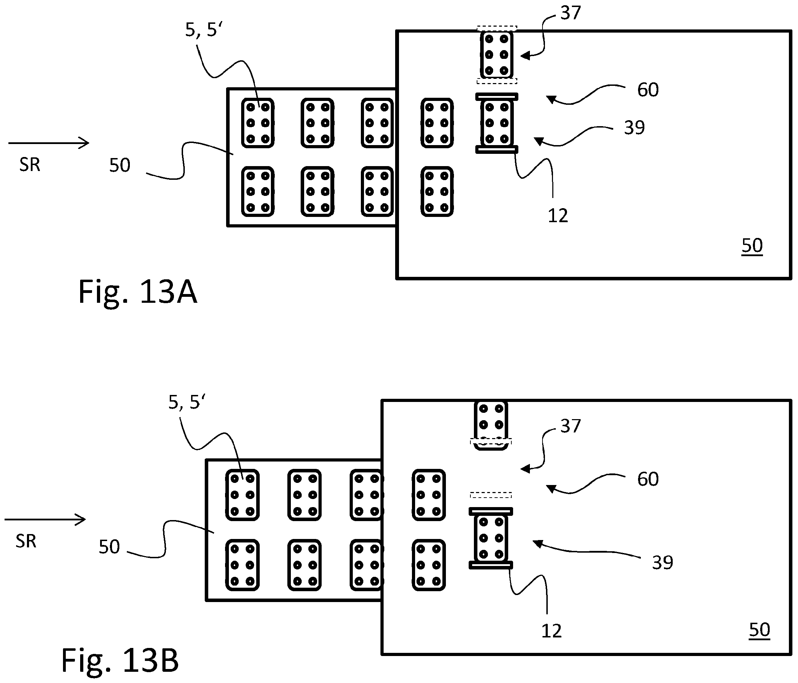

Figuren 11A und 11B zeigen zwei erste Schritte, wie sie bei einer weiteren denkbaren Ausführungsform des erfindungsgemäßen Verfahrens vorgesehen sein können. Zudem zeigen Figuren 12A und 12B zwei an die Schritte gemäß Figuren 11A und 11B zeitlich anschließende weitere Schritte und Figuren 13A und 13B zwei an die Schritte gemäß Figuren 12A und 12B zeitlich anschließende weitere Schritte, wie sie bei einer denkbaren Ausführungsform des erfindungsgemäßen Verfahrens vorgesehen sein können.

Die Schritte, wie sie in den Figuren 11A bis 13B vorgesehen sind, entsprechen vollständig den Schritten gemäß Figuren 5A bis 7B, so dass hierzu auf die Beschreibung zu vorhergehender Ausführungsform rückverwiesen wird.

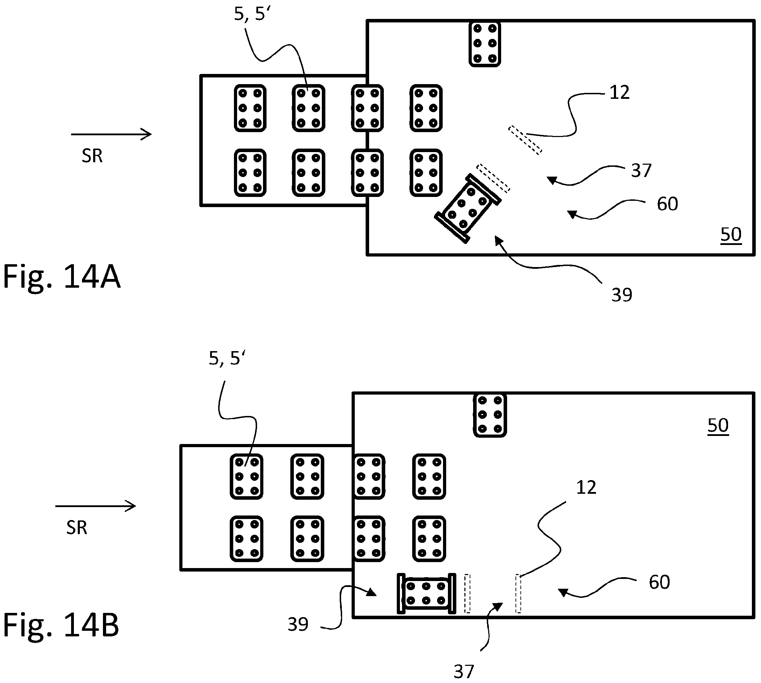

Figuren 14A und 14B zeigen zwei an die Schritte gemäß Figuren 13A und 13B zeitlich anschließende weitere Schritte, wie sie bei einer denkbaren Ausführungsform des erfindungsgemäßen Verfahrens vorgesehen sein können. Nachdem das über das Paar 37 gegenüberliegender Klemm- und/oder Greifelemente 12 entgegengenommene Stückgut 5 bzw. Gebinde 5' gemäß Figur 13B freigegeben wurde, wird die Klemm- und/oder Greifeinrichtung 60 zur zweiten Position P2 entlang der geschlossenen Arbeitsbahn 80 (vgl. Figur 10B) weiter bewegt. Während der Bewegung der Klemm- und/oder Greifeinrichtung 60 von der ersten Position P1 zur zweiten Position P2 wird die Klemm- und/oder Greifeinrichtung 60 zusammen mit dem ersten Paar 37 und dem zweiten Paar 39 sich gegenüberliegender Klemm- und/oder Greifelemente 12 sowie dem an der Klemm- und/oder Greifeinrichtung 60 verbleibenden und mittels des zweiten Paares 39 entgegengenommenen Stückgutes 5 um eine Achse gedreht, welche vorliegend vertikal bzw. in Richtung der Bildebene orientiert ist. Die Drehbewegung erfolgt um einen Winkel von 90° oder zumindest näherungsweise 90° und ist spätestens beendet, wenn die Klemm- und/oder Greifeinrichtung 60 die zweite Position P2 gemäß Figur 14B erreicht.

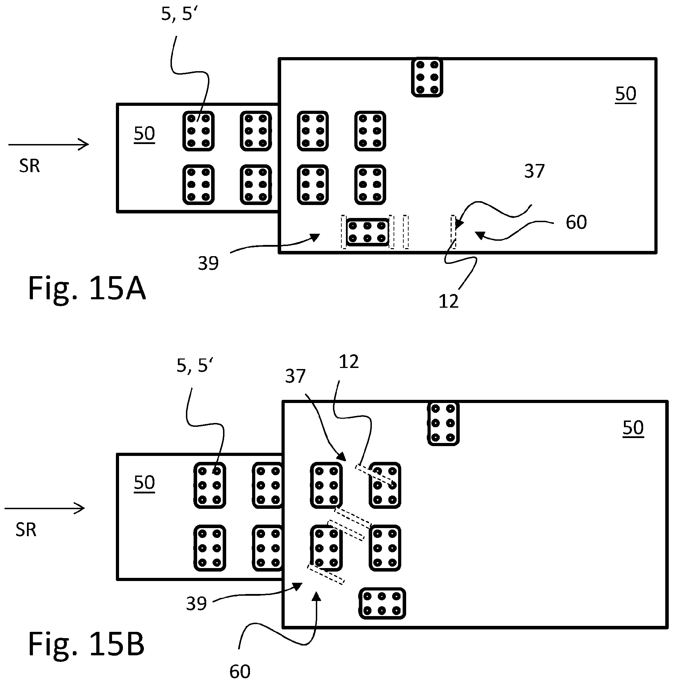

Figuren 15A und 15B zeigen zwei an die Schritte gemäß Figuren 14A und 14B zeitlich anschließende weitere Schritte, wie sie bei einer denkbaren Ausführungsform des erfindungsgemäßen Verfahrens vorgesehen sein können. In Figur 15A hat die Klemm- und/oder Greifeinrichtung 60 die zweite Position P2 (vgl. Figur 10B) der geschlossenen Arbeitsbahn 80 erreicht. Das über das Paar 39 sich gegenüberliegender Klemm- und/oder Greifelemente in Figur 14B noch gehaltene Stückgut 5 ist in Figur 15A bereits freigegeben. Die Klemm- und/oder Greifelemente 12 des Paares 39 können hierzu in Richtung nach oben bewegt und insbesondere in Richtung nach oben geschwenkt werden, um bei einer Bewegung der Klemm- und/oder Greifeinrichtung 60 gemäß Figur 15B nicht ungewollt mit Stückgütern 5 bzw. Gebinden 5' in Kontakt zu treten.

Eine Zusammenschau der Figuren 15A und 15B verdeutlicht zudem, dass die Klemm- und/oder Greifeinrichtung 60 nach Freigabe des über das Paar 39 sich gegenüberliegender Klemm- und/oder Greifelemente 12 aufgenommenen Stückgutes 5 in Richtung der Ausgangsposition zurückbewegt wird, wobei zeitlich überlagert mit der Bewegung ein Drehen der Klemm- und/oder Greifeinrichtung 60 in Gegenrichtung um 90° erfolgt.

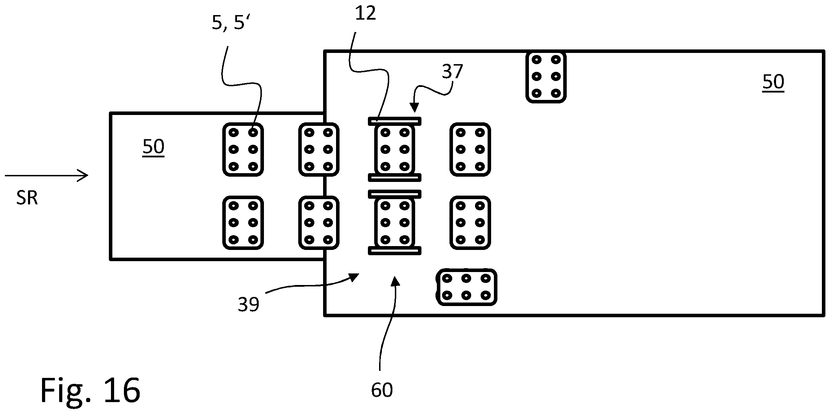

Figur 16 zeigt einen weiteren an die Schritte gemäß Figuren 15A und 15B anschließenden weiteren Schritt, wie er bei einer denkbaren Ausführungsform des erfindungsgemäßen Verfahrens vorgesehen sein kann. In Figur 16 hat die Klemm- und/oder Greifeinrichtung 60 die Ausgangsposition gemäß Figur 11A erreicht. Die Klemm- und/oder Greifelemente 12 beider Paare 37 und 39 wurden in Richtung nach unten zurückgeschwenkt. Die zwischen den beiden Paaren 37 sich gegenüberliegender Klemm- und/oder Greifelemente 12 befindlichen Stückgüter 5 werden bereits über die Klemm- und/oder Greifelemente 12 gehalten.

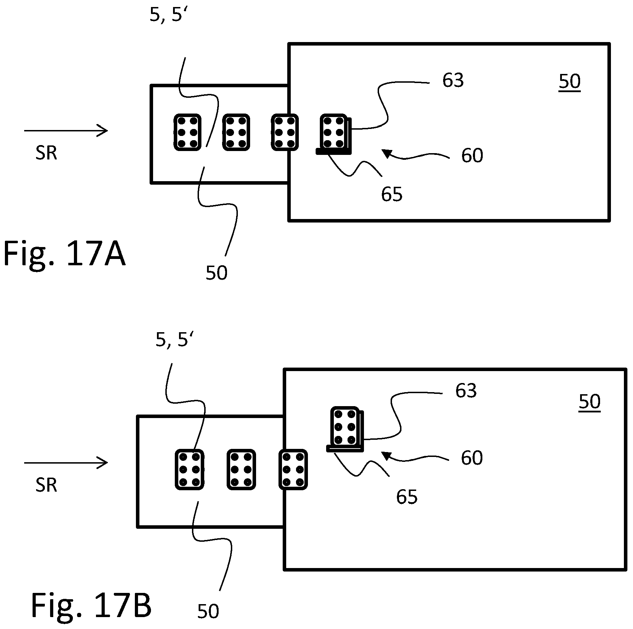

Figuren 17A und 17B zeigen zwei erste Schritte, wie sie bei einer weiteren denkbaren Ausführungsform des erfindungsgemäßen Verfahrens vorgesehen sein können. Die Klemm- und/oder Greifeinrichtung 60 besitzt im Ausführungsbeispiel aus Figuren 17 zwei Anschläge 63 und 65, welche lotrecht zueinander orientiert sind. Die Anschläge 63 und 65 bilden gemeinsam eine Aufnahme für ein Stückgut 5 bzw. Gebinde 5' aus. Die Stückgüter 5 bzw. Gebinde 5' werden in einer Reihe mittels der Horizontalfördereinrichtungen 50 in Richtung der Klemm- und/oder Greifeinrichtung 60 bewegt, welche ein zuvorderst angeordnetes Stückgut 5 der Reihe, wie in Figur 17A zu erkennen, in der durch die Anschläge 63 und 65 gebildeten Aufnahme entgegennimmt. Nach Entgegennahme ist das Stückgut 5 bzw. Gebinde 5` formschlüssig oder im Wesentlichen formschlüssig durch die Klemm- und/oder Greifeinrichtung 60 bzw. die zwei lotrecht zueinander orientierten Anschläge 63 und 65 aufgenommen.

Weiter wird die Klemm- und/oder Greifeinrichtung 60 nach Entgegennahme des jeweiligen Stückgutes 5 bzw. Gebindes 5' aus der in Figur 17A gezeigten Ausgangsposition entlang einer geschlossenen Arbeitsbahn 80 bewegt, wie sie beispielhaft in Figur 10B dargestellt ist. Eine Zusammenschau der Figuren 17A und 17B verdeutlicht eine Bewegung der Klemm- und/oder Greifeinrichtung 60 in Richtung der ersten Position P1. Die Bewegung erfolgt hierbei schräg zur Strömungsrichtung SR, in welcher Strömungsrichtung Stückgüter 5 durch die Horizontalfördereinrichtungen 50 bewegt werden.

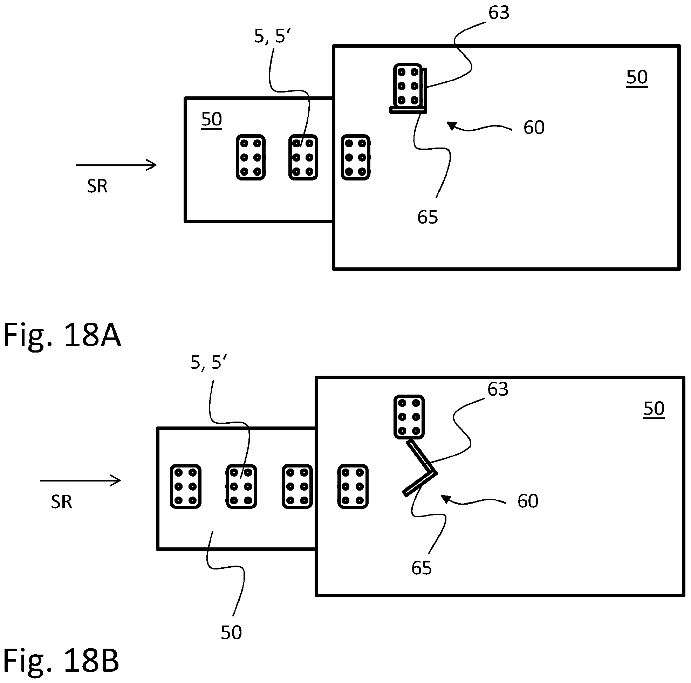

Figuren 18A und 18B zeigen zwei an die Schritte gemäß Figuren 17A und 17B zeitlich anschließende weitere Schritte, wie sie bei einer denkbaren Ausführungsform des erfindungsgemäßen Verfahrens vorgesehen sein können. In Figur 18A hat die Klemm- und/oder Greifeinrichtung 60 die erste Position P1 der geschlossenen Arbeitsbahn 80 (vgl. Figur 10B) erreicht und gibt das entgegengenommene Stückgut 5 frei. Wie Figur 18B zeigt, wird die Klemm- und/oder Greifeinrichtung 60 unter zeitlich überlagerter Drehbewegung um eine vertikale Achse in Richtung einer zweiten Position P2 der geschlossenen Arbeitsbahn 80 bewegt.

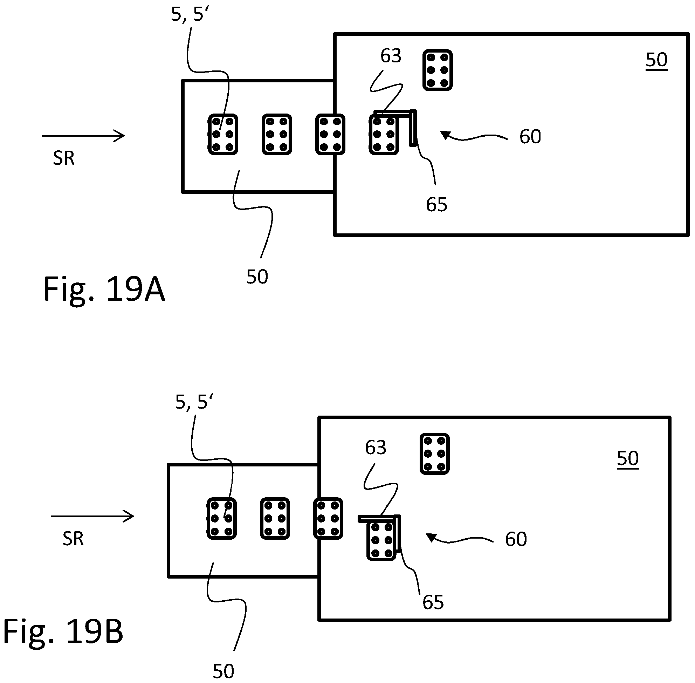

Eine Zusammenschau der Figur 18B mit Figur 19A lässt erkennen, dass eine Transportgeschwindigkeit der Horizontalfördereinrichtungen 50 und eine Bewegungsgeschwindigkeit der Klemm- und/oder Greifeinrichtung 60 derart aufeinander abgestimmt sind, dass die Klemm- und/oder Greifeinrichtung 60 bei ihrer Bewegung von der ersten Position P1 in Richtung der zweiten Position P2 auf ein weiteres Stückgut 5 Stückgutstromes trifft und das Stückgut 5 während unterbrechungsfreier Bewegung der Klemm- und/oder Greifeinrichtung 60 entgegennehmen bzw. mitnehmen kann.

Figuren 19A und 19B zeigen zwei an die Schritte gemäß Figuren 18A und 18B zeitlich anschließende weitere Schritte, wie sie bei einer denkbaren Ausführungsform des erfindungsgemäßen Verfahrens vorgesehen sein können. Wie soeben beschrieben, trifft die Klemm- und/oder Greifeinrichtung 60 im Verfahrensschritt gemäß Figur 19A auf ein weiteres Stückgut 5 des Stückgutstromes. In Figur 19A tritt hierbei zunächst der erste Anschlag 63 der Klemm- und/oder Greifeinrichtung 60 mit dem weiteren Stückgut 5 in Kontakt. Im Verlauf einer fortgesetzten Bewegung der Klemm- und/oder Greifeinrichtung 60 in Richtung der zweiten Position P2 tritt hierauf der zweite Anschlag 65 mit dem weiteren Stückgut 5 in Kontakt, woraus resultierend das weitere Stückgut 5 formschlüssig über die Klemm- und/oder Greifeinrichtung 60 bzw. über die beiden lotrecht zueinander orientierten Anschläge 63 und 65 der Klemm- und/oder Greifeinrichtung 60 aufgenommen ist.

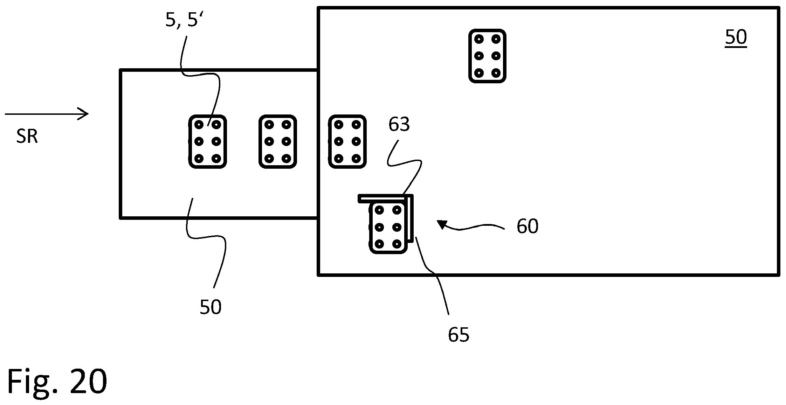

Figur 20 zeigt einen an die Schritte gemäß Figuren 19A und 19B anschließenden weiteren Schritt, wie er bei einer denkbaren Ausführungsform des erfindungsgemäßen Verfahrens vorgesehen sein kann. Die Klemm- und/oder Greifeinrichtung 60 hat in Figur 20 die Position P2 (vgl. Figur 10B) der geschlossenen Arbeitsbahn 80 erreicht. In der Position P2 gemäß Figur 20 kann die Klemm- und/oder Greifeinrichtung 60 das weitere Stückgut 5 bzw. Gebinde 5' freigeben und zeitlich hierauf folgend in Richtung der Ausgangsposition gemäß Figur 17A zurückbewegt werden. Zeitlich überlagert mit der von Figur 20 ausgehenden Rückbewegung in die in Figur 17A gezeigte Ausgangsposition wird die Klemm- und/oder Greifeinrichtung um einen Winkel von 90° gedreht. Die Drehachse ist hierbei vertikal bzw. in Richtung der Bildebene orientiert. Durch die Freigabe der Stückgüter 5 in den beiden Positionen P1 und P2 der geschlossenen Arbeitsbahn 80 (vgl. Figur 10B) können die freigegebenen Stückgüter 5 in eine vorbestimmte relative Anordnung gegenüber weiteren Stückgütern 5 gebracht werden. Aus der Anordnung kann zeitlich nachfolgend mittels Verdichtung der Stückgüter 5 bzw. Gebinde 5' eine palettierfähige Lage gebildet werden.

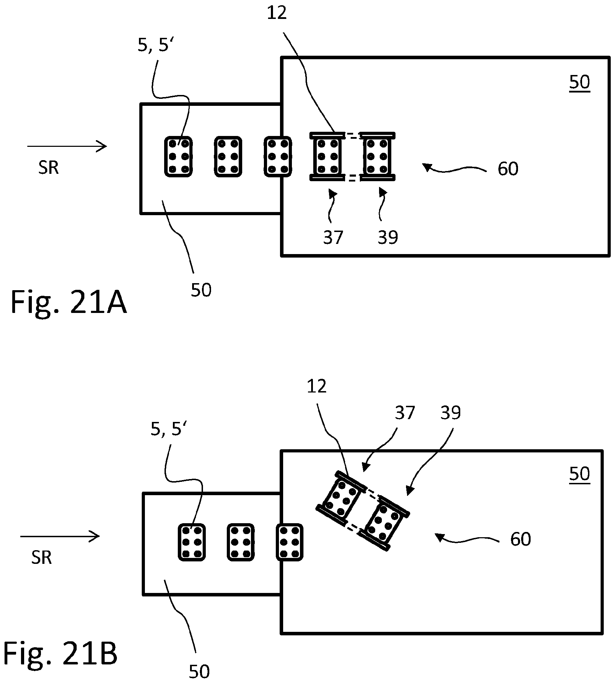

Figuren 21A und 21B zeigen zwei erste Schritte, wie sie bei einer weiteren denkbaren Ausführungsform des erfindungsgemäßen Verfahrens vorgesehen sein können. Die Stückgüter 5 werden in der gezeigten Ausführungsform in einer Reihe und zueinander beabstandet mittels der Horizontalfördereinrichtungen 50 in Strömungsrichtung SR transportiert.

Die Klemm- und/oder Greifeinrichtung 60 besitzt zwei Paare 37 und 39 sich gegenüberliegender Klemm- und/oder Greifelemente 12, wobei ein jeweiliges Paar 37 bzw. 39 sich gegenüberliegender Klemm- und/oder Greifelemente 12 jeweils eine Aufnahme für ein Stückgut 5 bzw. Gebinde 5' ausbildet. Die Aufnahmen, welche durch die Paare 37 und 39 sich gegenüberliegender Klemm- und/oder Greifelemente 12 ausgebildet werden, sind in der in Figur 21A gezeigten Aufnahmeposition in Strömungsrichtung SR fluchtend zueinander orientiert. Die Klemm- und/oder Greifeinrichtung 60 kann hierdurch zeitgleich zwei Stückgüter 5 bzw. Gebinde 5` des einreihigen Stückgutstromes entgegennehmen und kraftbeaufschlagt an der Klemm- und/oder Greifeinrichtung 60 festsetzen.

Figur 21B verdeutlicht die Bewegung der Klemm- und/oder Greifeinrichtung 60 nach Entgegennahme bzw. kraftbeaufschlagter Festsetzung zweier Stückgüter 5 des einreihigen Stückgutstromes mittels der beiden Paare 37 bzw. 39 sich gegenüberliegender Klemm- und/oder Greifelemente 12. Die Klemm- und/oder Greifeinrichtung 60 wird in Figur 21B in Richtung einer ersten Position P1 (vgl. Figur 10B) einer geschlossenen Arbeitsbahn 80 bewegt. Zeitlich überlagert mit der Bewegung der Klemm- und/oder Greifeinrichtung 60 in Richtung der ersten Position P1 wird die Klemm- und/oder Greifeinrichtung 60 gemeinsam mit den entgegengenommenen Stückgütern 5 bzw. Gebinden 5' um eine vertikale Achse gedreht, welche vorliegend in Richtung der Bildebene orientiert ist.

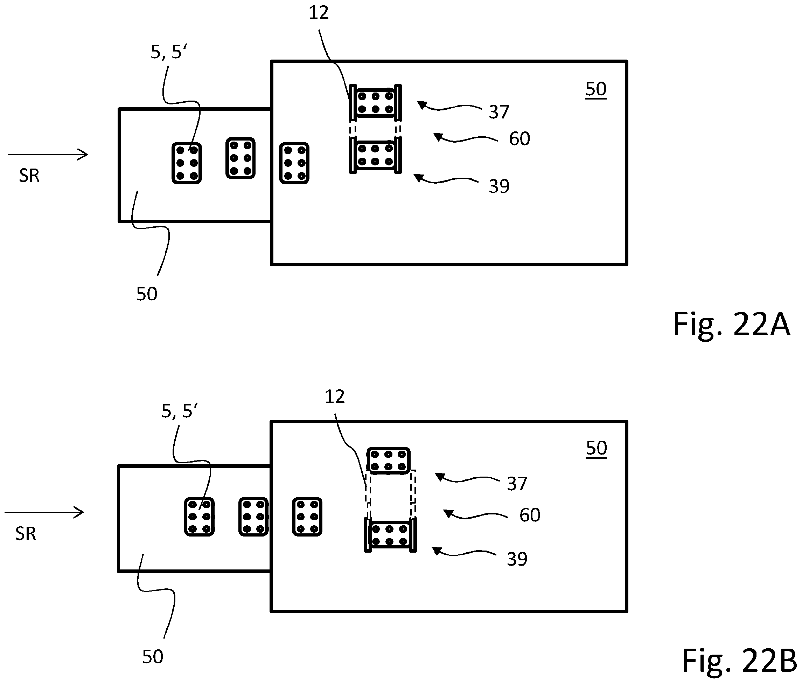

Figuren 22A und 22B zeigen zwei an die Schritte gemäß Figuren 21A und 21B anschließende weitere Schritte, wie sie bei einer denkbaren Ausführungsform des erfindungsgemäßen Verfahrens vorgesehen sein können. In Figur 22A hat die Klemm- und/oder Greifeinrichtung 60 die erste Position P1 (vgl. Figur 10B) der geschlossenen Arbeitsbahn 80 erreicht. Eine Zusammenschau der Figuren 21 mit Figur 22A lässt hierbei erkennen, dass die Klemm- und/oder Greifeinrichtung 60 zusammen mit den entgegengenommenen Stückgütern 5 ausgehend von der in Figur 21A gezeigten Ausgangsposition bis zum Erreichen der Position P1 der geschlossenen Arbeitsbahn 80 um einen Winkel von 90° gedreht wurde.

Bei Erreichen der Position P1 gemäß Figur 22A gibt die Klemm- und/oder Greifeinrichtung 60 das über das Paar 37 sich gegenüberliegender Klemm- und/oder Greifelemente 12 entgegengenommene Stückgut 5 bzw. Gebinde 5` frei und wird unmittelbar hierauf folgend weiter in Richtung der Position P2 bzw. der zweiten Position der geschlossenen Arbeitsbahn 80 bewegt. Zur Freigabe können die sich gegenüberliegenden Klemm- und/oder Greifelemente 12 des Paares 37 in Richtung nach oben bewegt und insbesondere in Richtung nach oben geschwenkt werden. Die Klemm- und/oder Greifeinrichtung kann daher beispielsweise gemäß vorheriger Beschreibung zum Ausführungsbeispiel aus Figur 4 ausgebildet sein.

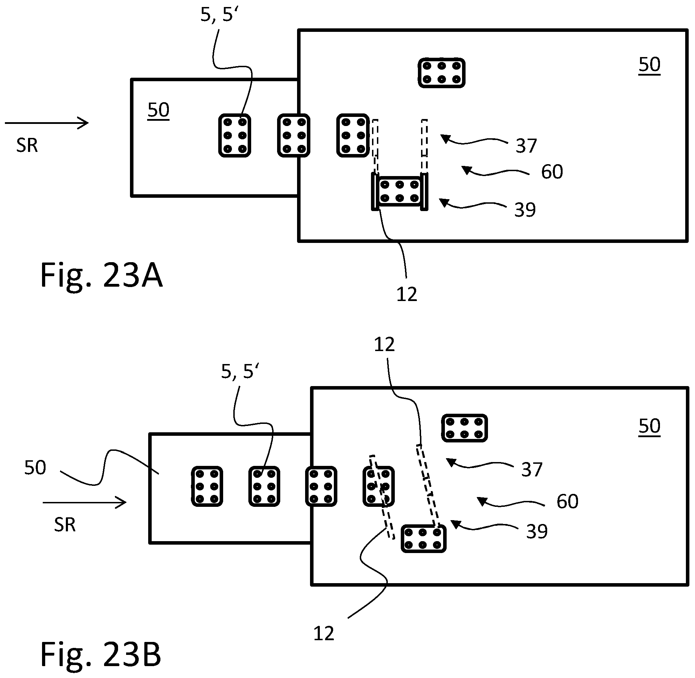

Figuren 23A und 23B zeigen zwei an die Schritte gemäß Figuren 22A und 22B anschließende weitere Schritte, wie sie bei einer denkbaren Ausführungsform des erfindungsgemäßen Verfahrens vorgesehen sein können. Insbesondere lässt eine Zusammenschau der Figuren 22B und 23A erkennen, dass sich das bei Erreichen der Position P1 bereits freigegebene Stückgut 5 in Strömungsrichtung SR weiter bewegt, während die Klemm- und/oder Greifeinrichtung 60 in Richtung der Position P2 verfahren wird.

In Figur 23A hat die Klemm- und/oder Greifeinrichtung 60 die Position P2 (vgl. Figur 10B) erreicht, in welcher die Klemm- und/oder Greifeinrichtung 60 das über das Paar 39 sich gegenüberliegender Klemm- und/oder Greifelemente 12 entgegengenommene Stückgut 5 bzw. Gebinde 5' freigibt. Zum Freigeben des Stückgutes 5 werden die sich gegenüberliegenden Klemm- und/oder Greifelemente 12 des Paares 39 in Richtung nach oben geschwenkt.

Figur 23B verdeutlicht darüber hinaus eine Bewegung der Klemm- und/oder Greifeinrichtung 60 in Richtung der in Figur 21A gezeigten Ausgangsposition. Bei Bewegung der Klemm- und/oder Greifeinrichtung 60 von der Position P2 in Richtung der Ausgangsposition wird die Klemm- und/oder Greifeinrichtung 60 zeitlich überlagert um einen Winkel von 90° zurückgedreht. Während einer Bewegung der Klemm- und/oder Greifeinrichtung 60 von der Position P2 (vgl. Figur 10B) in Richtung der Ausgangsposition gemäß Figur 21A wird das in der zweiten Position P2 freigegebene Stückgut 5 weiter in Strömungsrichtung SR befördert bzw. bewegt.

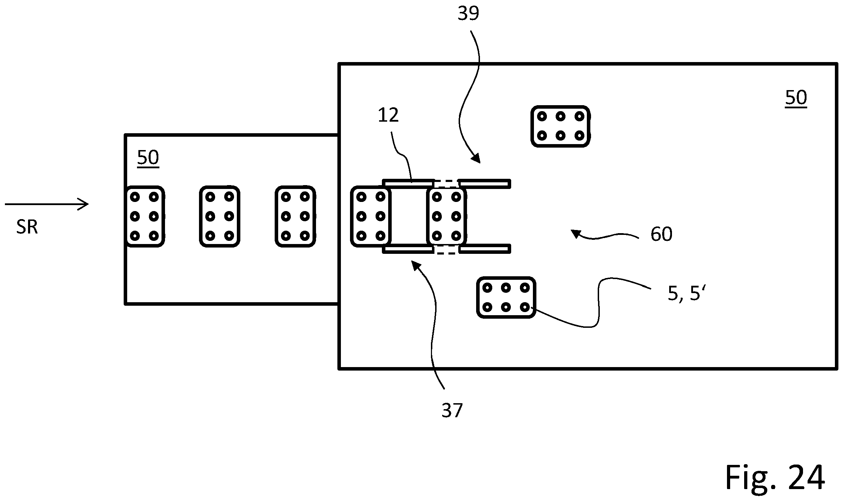

Figur 24 zeigt einen an die Schritte gemäß Figuren 23A und 23B anschließenden weiteren Schritt, wie er bei einer denkbaren Ausführungsform des erfindungsgemäßen Verfahrens vorgesehen sein kann. Die Klemm- und/oder Greifeinrichtung 60 hat in Figur 24 die Ausgangsposition gemäß Figur 21A erreicht. Die Stückgüter 5 werden mittels der Horizontalfördereinrichtungen 50 zwischen die Paare 37 und 39 sich gegenüberliegender Klemm- und/oder Greifelemente 12 bewegt. Die Klemm- und/oder Greifeinrichtung 60 erfährt hierbei keine Eigenbewegung und ruht ortsfest in ihrer Ausgangsposition, bis die beiden zuvorderst bewegten Stückgüter 5 des einreihigen Stückgutstromes zwischen die Paare 37 bzw. 39 sich gegenüberliegender Klemm- und/oder Greifelemente 12 gelangen. Sodann werden die zuvorderst bewegten beiden Stückgüter 5 bzw. Gebinde 5` des einreihigen Stückgutstromes durch eine Zustellbewegung der Paare 37 und 39 sich gegenüberliegender Klemm- und/oder Greifelemente 12 an der Klemm- und/oder Greifeinrichtung 60 festgesetzt, worauf eine Bewegung der Klemm- und/oder Greifeinrichtung 60 gemäß vorheriger Beschreibung zu den Figuren 21B bis 23A erfolgt.

### Bezugszeichenliste

- 1: Vorrichtung
- 2: Basis
- 5: Stückgut
- 5`: Gebinde
- 6: Welle
- 7: Arbeitsarm
- 8: Hohlwelle
- 9: Oberer Abschnitt
- 11: Unterarm
- 12: Klemm- und/oder Greifelement
- 13: Oberarm
- 15: Getriebe
- 16: Planetengetriebe
- 17: Betätigungselement
- 18: Strangförmiges flexibles Zugelement
- 19: Unterer Abschnitt
- 20: Übertragungseinrichtung
- 22: Zugfeder
- 24: Gelenk
- 26: Hebel
- 28: Gelenk
- 30: Gehäuse
- 32: Obere Aufhängung
- 33: Linearführung
- 35: Umlenkrolle
- 37: Erstes Paar sich gegenüberliegender Klemm- und/oder Greifelemente
- 39: Zweites Paar sich gegenüberliegender Klemm- und/oder Greifelemente
- 40: Manipulator
- 42: Parallelkinematik-Roboter
- 44: Schwenkachse
- 46: Tragsäule
- 50: Horizontalfördereinrichtung
- 60: Klemm- und/oder Greifeinrichtung
- 63: Anschlag
- 65: Anschlag
- 70: Lager
- 71: Aufhängungslager
- 80: Geschlossene Arbeitsbahn
- P1: Position
- P2: Position
- S: Steuerungseinrichtung
- SR: Strömungsrichtung

## Patentansprüche

1. Vorrichtung (1) zum Manipulieren von Stückgütern (5), umfassend
- einen Manipulator (40) mit mindestens einer Klemm- und/oder Greifeinrichtung (60), über welche mindestens eine Klemm- und/oder Greifeinrichtung (60) einzelne Stückgüter (5) eines aus einer Vielzahl an Stückgütern (5) bestehenden Stückgutstromes entgegengenommen und gegenüber weiteren Stückgütern (5) des Stückgutstromes in eine neue relative Anordnung gebracht werden können,
- wenigstens eine Horizontalfördereinrichtung (50), über welche ein aus einer Vielzahl an Stückgütern (5) bestehender Stückgutstrom einem Erfassungsbereich des Manipulators (40) zuführbar ist, sowie
- eine Steuerungseinrichtung (S), welche zur Vorgabe einer bestimmten Bewegung der mindestens einen Klemm- und/oder Greifeinrichtung (60) mit dem Manipulator (40) in Verbindung steht, wobei
die Steuerungseinrichtung (S) Informationen zu einer geschlossenen Arbeitsbahn (80) für die mindestens eine Klemm- und/oder Greifeinrichtung (60) besitzt, auf welcher geschlossenen Arbeitsbahn (80) mindestens zwei unterschiedliche Positionen (P1, P2) festgesetzt sind und welche geschlossene Arbeitsbahn (80) einen Bahnverlauf von einer Startposition, in der Stückgüter (5) von dem Manipulator (40) entgegengenommen werden, über die zwei unterschiedlichen Positionen (P1, P2) zu einer Position, in welcher wieder neue Stückgüter (5) entgegengenommen werden, betrifft,
und wobei der Manipulator (40) via die Steuerungseinrichtung (S) derart ansteuerbar ist, dass die mindestens eine Klemm- und/oder Greifeinrichtung (60) die zwei unterschiedlichen Positionen (P1, P2) anfährt und bei Erreichen einer jeweiligen der mindestens zwei unterschiedlichen Positionen (P1, P2) jeweils mindestens ein entgegengenommenes Stückgut (5) freigibt, und wobei die mindestens eine Klemm- und/oder Greifeinrichtung (60) derart ausgebildet ist,
dass mindestens ein von der mindestens einen Klemm- und/oder Greifeinrichtung (60) entgegengenommenes Stückgut (5) vor seiner Freigabe über die mindestens eine Klemm- und/oder Greifeinrichtung (60) um eine vertikale Achse drehbar ist.

2. Vorrichtung nach Anspruch 1, bei der die Klemm- und/oder Greifeinrichtung (60) mindestens zwei Aufnahmen zum Entgegennehmen jeweils mindestens eines Stückgutes (5) besitzt, wobei die mindestens zwei Aufnahmen zur Freigabe des jeweiligen mindestens einen entgegengenommenen Stückgutes (5) via die Steuerungseinrichtung (S) unabhängig voneinander ansteuerbar sind und wobei sämtliche der mindestens zwei Aufnahmen jeweils mindestens ein Klemm- und/oder Greifelement (12) umfassen, mittels welchen mindestens einen Klemm- und/oder Greifelementes (12) das jeweilige mindestens eine Stückgut (5) nach Entgegennahme gehalten werden kann und welche Klemm- und/oder Greifelemente (12) jeweils individuell relativ zu einer Manipulatorbasis mittels eines eigenen Antriebs drehbar sind.

3. Vorrichtung nach Anspruch 1 oder Anspruch 2, bei welcher sich die wenigstens eine Horizontalfördereinrichtung (50) vollständig durch den Erfassungsbereich des Manipulators (40) erstreckt und mit der Steuerungseinrichtung (S) in Verbindung steht, über welche die wenigstens eine Horizontalfördereinrichtung (50) zum unterbrechungsfreien Bewegen der Vielzahl an Stückgütern (5) des Stückgutstromes ansteuerbar ist.

4. Vorrichtung nach einem der Ansprüche 1 bis 3, bei welcher der Manipulator (40) als Parallelkinematik-Roboter (42) ausgebildet ist.

5. Vorrichtung nach einem der Ansprüche 1 bis 3, bei welcher der Manipulator (40) derart beschaffen ist, dass die mindestens eine Klemm- und/oder Greifeinrichtung (60) an zwei oder an drei zueinander senkrecht stehenden Führungen bzw. Achsen gelagert ist, entlang welcher die mindestens eine Klemm- und/oder Greifeinrichtung (60) motorisch und jeweils durch einen eigenen Antrieb je Achse verschiebbar ist.

6. Vorrichtung nach Anspruch 5, bei der die Führungen an einem Portal angeordnet sind.

7. Verfahren zum Umgang mit Stückgütern (5), das Verfahren umfassend folgende Schritte:
- Ausbilden eines aus einer Vielzahl an Stückgütern (5) bestehenden Stückgutstromes und Führen des Stückgutstromes in einen Erfassungsbereich eines Manipulators (40),
- Entgegennehmen von Stückgütern (5) des Stückgutstromes über mindestens eine Klemm- und/oder Greifeinrichtung (60) des Manipulators (40) und Bewegen der mindestens einen Klemm- und/oder Greifeinrichtung (60) entlang einer geschlossenen Arbeitsbahn (80), wobei die mindestens eine Klemm- und/oder Greifeinrichtung (60) während ihrer Bewegung entlang der geschlossenen Arbeitsbahn (80) entgegengenommene Stückgüter (5) des Stückgutstromes in eine neue relative Anordnung gegenüber weiteren Stückgütern (5) überführt und bei welchem Verfahren vorgesehen ist, dass
- entlang der geschlossenen Arbeitsbahn (80) mindestens zwei unterschiedliche bestimmte Positionen (P1, P2) festgesetzt sind, wobei die geschlossene Arbeitsbahn (80) einen Bahnverlauf von einer Startposition, in der Stückgüter (5) von dem Manipulator (40) entgegengenommen werden, über die zwei unterschiedlichen Positionen (P1, P2) zu einer Position, in welcher wieder neue Stückgüter (5) entgegengenommen werden, betrifft und wobei die mindestens eine Klemm- und/oder Greifeinrichtung (60) des Manipulators (40) zum Überführen der entgegengenommenen Stückgüter (5) in die neue relative Anordnung bei Erreichen der mindestens zwei unterschiedlichen bestimmten Positionen (P1, P2) jeweils mindestens ein entgegengenommenes Stückgut (5) freigibt, und bei welchem Verfahren
- mindestens ein von der mindestens einen Klemm- und/oder Greifeinrichtung (60) entgegengenommenes Stückgut (5) vor seiner Freigabe über die mindestens eine Klemm- und/oder Greifeinrichtung (60) um eine vertikale Achse gedreht wird.

8. Verfahren nach Anspruch 7, bei welchem der Manipulator (40) über die mindestens eine Klemm- und/oder Greifeinrichtung (60) wenigstens zwei Stückgüter (5) des Stückgutstromes zumindest näherungsweise zeitgleich entgegennimmt und von den wenigstens zwei entgegengenommenen Stückgütern (5) jeweils mindestens ein entgegengenommenes Stückgut (5) bei Erreichen der mindestens zwei unterschiedlichen bestimmten Positionen (P1, P2) freigibt.

9. Verfahren nach Anspruch 7 oder Anspruch 8, bei welchem ein Verlauf der geschlossenen Arbeitsbahn (80) derart ausgebildet ist, dass die mindestens eine Klemm- und/oder Greifeinrichtung (60) unmittelbar bei Erreichen einer ersten (P1) der mindestens zwei bestimmten unterschiedlichen Positionen (P1, P2) und Freigabe des jeweiligen mindestens einen entgegengenommenen Stückgutes (5) seine Bewegungsrichtung ändert und auf direktem Wege eine zweite (P2) der mindestens zwei unterschiedlichen bestimmten Positionen (P1, P2) anfährt.

10. Verfahren nach einem oder mehreren der Ansprüche 7 bis 9, bei welchem die mindestens eine Klemm- und/oder Greifeinrichtung (60) die mindestens zwei unterschiedlichen bestimmten Positionen (P1, P2) jeweils über eine Bewegung in linearer Richtung anfährt.

11. Verfahren nach einem oder mehreren der Ansprüche 7 bis 10, bei welchem im Stückgutstrom die Vielzahl an Stückgüter (5) bei Eintritt in den Erfassungsbereich des Manipulators (40) in wenigstens zwei parallel zueinander orientierten Reihen bewegt werden, wobei die mindestens eine Klemm- und/oder Greifeinrichtung (60) aus mindestens einer ersten und mindestens einer zweiten der wenigstens zwei parallel zueinander orientierten Reihen jeweils mindestens ein Stückgut (5) entgegennimmt und zeitlich hierauf folgend die mindestens zwei unterschiedlichen bestimmten Positionen (P1, P2) der geschlossenen Arbeitsbahn (80) anfährt.

12. Verfahren nach einem der Ansprüche 7 bis 11, bei dem die Klemm- und/oder Greifeinrichtung (60) mindestens zwei Aufnahmen zum Entgegennehmen jeweils mindestens eines Stückgutes (5) besitzt, wobei die mindestens zwei Aufnahmen zur Freigabe des jeweiligen mindestens einen entgegengenommenen Stückgutes (5) via die Steuerungseinrichtung (S) unabhängig voneinander angesteuert werden und wobei sämtliche der mindestens zwei Aufnahmen jeweils mindestens ein Klemm- und/oder Greifelement umfassen, mittels welchen mindestens einen Klemm- und/oder Greifelementes (12) das jeweilige mindestens eine Stückgut (5) nach Entgegennahme gehalten wird und welche Klemm- und/oder Greifelemente (12) jeweils individuell und relativ zu einer Manipulatorbasis mittels eines eigenen Antriebs gedreht werden.

13. Verfahren nach einem der Ansprüche 7 bis 12, bei dem der Manipulator (40) derart beschaffen ist, dass die mindestens eine Klemm- und/oder Greifeinrichtung (60) an zwei oder an drei zueinander senkrecht stehenden Führungen bzw. Achsen gelagert ist, entlang welcher die mindestens eine Klemm- und/oder Greifeinrichtung (60) motorisch und jeweils durch einen eigenen Antrieb je Achse verschoben wird.

14. Verfahren nach Anspruch 13, bei dem die Führungen an einem Portal angeordnet sind.

15. Verfahren nach einem der Ansprüche 7 bis 14, bei welchem der Stückgutstrom über einen ersten Horizontalförderer transportiert wird und bei welchem Verfahren ein weiterer Horizontalförderer vorgesehen ist, an den das jeweilige Stückgut (5) an der zweiten Position (P2) abgegeben wird.
